# FASCICULE DE BREVET EUROPEEN

(11) **EP 2 673 732 B1**
(45) Date de publication et mention de la délivrance du brevet: **16.08.2017**
(21) Numéro de dépôt: 12708900.1
(22) Date de dépôt: 10.02.2012
(51) Int. Cl.: G06F 21/72

(54) **PROCEDE DE TRANSACTION SECURISEE A PARTIR D'UN TERMINAL NON SECURISE**
SICHERES TRANSAKTIONSVERFAHREN AUS EINEM UNSICHEREN ENDGERÄT
SECURE TRANSACTION METHOD FROM A NON-SECURE TERMINAL

(30) Priorité: 11.02.2011 FR 1100422
(43) Date de publication de la demande: 18.12.2013
(73) Titulaire: Skeyecode, 75008 Paris (FR)
(72) Inventeur: Leleu, Jean-Luc, 75005 Paris (FR)
(74) Mandataire: de Roquemaurel, Bruno
(86) Numéro de dépôt international: PCT/FR2012/050294
(87) Numéro de publication internationale: WO 2012/107698

(56) Documents cités:
- EP-A2- 1 821 201
- EP-A2- 2 023 333
- WO-A1-03/067797
- US-A1- 2003 108 198
- US-A1- 2006 129 485
- MENEZES A J ET AL: "HANDBOOK OF APPLIED CRYPTOGRAPHY", HANDBOOK OF APPLIED CRYPTOGRAPHY, XX, XX, 1 octobre 1996 (1996-10-01), pages 385-387,497, XP002925297,
- MENEZES ET AL: "Handbook of Applied Cryptography, PASSAGE", 1 janvier 1997 (1997-01-01), HANDBOOK OF APPLIED CRYPTOGRAPHY; [CRC PRESS SERIES ON DISCRETE MATHEMATICES AND ITS APPLICATIONS], CRC PRESS SERIES ON DISCRETE MATHEMATICS AND ITS APPLICATIONS, BOCA RATON, FL, US, PAGE(S) 397 - 399, XP002296840, ISBN: 978-0-8493-8523-0 page 399

## Description

La présente invention concerne un procédé de transaction sécurisée entre un terminal mobile et un serveur distant.

Récemment sont apparus des terminaux mobiles, appelés "téléphones intelligents" ("smartphones") équipés de moyens de connexion à un réseau de transmission de données tel que le réseau Internet, d'un processeur principal et d'un écran d'affichage contrôlé par un processeur graphique GPU (Graphics Processing Unit). Un tel terminal comprend également un organe de commande pouvant se présenter sous la forme d'un clavier séparé de l'écran d'affichage ou d'une surface tactile associée à ce dernier.

Parallèlement, le commerce électronique a connu un fort développement. Dans ce contexte, on cherche à réaliser des transactions de commerce électronique à partir de terminaux mobiles, ce qui soulève notamment des problèmes de sécurité. En effet, il est possible d'installer dans un terminal de type téléphone intelligent, et de faire exécuter par le processeur principal du terminal, un logiciel dit "malveillant" ayant accès à l'ensemble de la mémoire accessible par le processeur principal. Un tel logiciel peut être configuré pour espionner d'éventuelles transactions conduites à partir du terminal et de récupérer d'éventuelles données secrètes manipulées durant ces transactions pour les transmettre par le réseau.

Pour assurer la sécurité de telles transactions, il a déjà été proposé d'utiliser comme élément de sécurité et de calcul cryptographique un processeur sécurisé tel que le processeur d'une de carte SIM (Subscriber Identification Module) équipant en général les téléphones mobiles. Pour pouvoir exécuter une ou plusieurs applications de paiement, le processeur sécurisé doit pouvoir mémoriser autant de clés cryptographiques secrètes que d'applications de paiement. Or le chargement d'une application dans la mémoire d'un processeur sécurisé est une opération complexe devant être hautement sécurisée. A cet effet, elle nécessite des intervenants externes comme un Gestionnaire de Service de Confiance ("Trusted Service Manager"). Comme les cartes SIM sont émises par un opérateur de téléphonie mobile, celui-ci peut refuser l'installation de telles applications dans la carte. En outre, en cas de vol ou lors d'une opération de maintenance du téléphone, le processeur de la carte SIM peut faire l'objet d'attaques par un fraudeur visant à découvrir les clés secrètes qu'il mémorise.

L'accès à des fonctions sécurisées installées dans le processeur d'une carte SIM nécessite généralement la saisie d'un code secret (code PIN) au moyen de l'organe de commande connecté au processeur principal du terminal. Il en résulte qu'un code secret saisi par l'utilisateur transite nécessairement par le processeur principal. Un logiciel malveillant exécuté par le processeur principal peut donc avoir accès à ce code secret.

Par ailleurs, il a déjà été proposé d'utiliser la puissance de calcul des processeurs graphiques installés dans les ordinateurs pour effectuer des calculs cryptographiques. En effet, un tel processeur dispose d'une architecture de calcul parallèle qui s'avère adaptée à la réalisation de certains calculs cryptographiques comme des calculs de chiffrement et déchiffrement symétriques ou asymétriques. Toutefois, un processeur graphique ne dispose généralement pas de mémoire non volatile. Il n'est donc pas possible d'y stocker une application ou une clé secrète, sans que celles-ci disparaissent à chaque extinction de l'ordinateur. Il en résulte un problème de conservation de données secrètes nécessaires à la conduite de transactions sécurisées.

En outre, le processeur graphique ne peut pas communiquer directement avec un serveur externe. Toutes les données d'une transaction doivent donc être relayées par le processeur principal de l'ordinateur assurant la gestion de circuits de communication de l'ordinateur. Il en résulte qu'un programme malveillant installé dans l'ordinateur peut récupérer et mémoriser toutes les données de transaction échangées entre le processeur graphique et le serveur. Même si les données de transaction sont chiffrées avant d'être transmises, le programme malveillant peut réutiliser les données de transaction chiffrées pour conduire une transaction identique à celle correspondant aux données mémorisées.

Il est donc souhaitable de protéger des données secrètes ou plus généralement, des données sensibles comme des données de transaction, lors de leur transit dans un terminal disposant d'un processeur graphique, ou de leur transmission entre un tel terminal et un serveur.

Des modes de réalisation concernent un procédé de transaction comprenant des étapes consistant à : prévoir un terminal comprenant un processeur principal, un processeur graphique contrôlant un écran d'affichage, et un organe de commande, le processeur graphique comprenant une mémoire non accessible de l'extérieur du processeur graphique, établir une liaison entre le processeur graphique et un processeur sécurisé, par l'intermédiaire du processeur principal, la liaison étant sécurisée au moyen d'une clé de chiffrement partagée uniquement par le processeur graphique et le processeur sécurisé, et non accessible de l'extérieur du processeur graphique et du processeur sécurisé, présenter à l'utilisateur des premières données, recueillir des secondes données, à partir de commandes introduites par l'utilisateur au moyen de l'organe de commande, en relation avec les premières données, transmettre les secondes données au processeur sécurisé, authentifier l'utilisateur à partir des secondes données, et si l'utilisateur a été authentifié, exécuter la transaction, la liaison sécurisée étant utilisée pour transmettre les premières données, et/ou pour transmettre les secondes données, et/ou pour exécuter la transaction.

Selon un mode de réalisation, les premières données comprennent une séquence d'images affichées à l'écran d'affichage par le processeur graphique, chaque image de la séquence étant décomposée en plusieurs trames complémentaires non intelligibles individuellement pour un utilisateur, les trames complémentaires étant générées par un algorithme de cryptographie visuelle et affichées successivement de manière à ce que l'image correspondante apparaisse à l'écran d'affichage d'une manière intelligible pour l'utilisateur.

Selon un mode de réalisation, les premières données comprennent une image ou plusieurs images affichées successivement à l'écran d'affichage par le processeur graphique, chaque image affichée n'étant intelligible qu'en présence d'une image formée sur une étiquette semi transparente disposée sur l'écran d'affichage de manière à être superposée à l'image affichée, l'image formée sur l'étiquette et l'image affichée ou certaines des images affichées étant générées par un algorithme de cryptographie visuelle à partir d'une image intelligible à présenter à l'utilisateur.

Selon un mode de réalisation, les premières données sont transmises par le processeur sécurisé au processeur graphique par la liaison sécurisée, ou bien sont générées par le processeur graphique.

Selon un mode de réalisation, le processeur sécurisé est implanté sur une carte installée dans le terminal, ou dans un serveur distant connecté au terminal par l'intermédiaire d'un réseau de transmission de donnée.

Selon un mode de réalisation, les secondes données sont des commandes introduites par l'utilisateur au moyen de l'organe de commande si les premières données ne sont pas directement accessibles, ou bien sont déterminées à partir de ces commandes en fonction des premières données et transmises au processeur sécurisé par la liaison sécurisée.

Selon un mode de réalisation, la liaison sécurisée est établie sans utiliser d'algorithme de chiffrement asymétrique à partir d'une donnée secrète partagée par le processeur graphique et le processeur sécurisé.

Selon un mode de réalisation, le procédé comprend des étapes d'authentification de l'utilisateur au moyen d'un code secret et d'utilisation du code secret pour générer une clé partagée uniquement par le processeur graphique et le processeur sécurisé, la clé partagée étant utilisée pour établir la liaison sécurisée entre les processeurs graphique et sécurisé.

Selon un mode de réalisation, le procédé comprend des étapes de : génération par le processeur graphique ou le processeur sécurisé d'une suite de numéros de séquence comportant un premier numéro de séquence, et des numéros de séquence suivants obtenus chacun par application d'une fonction de hachage à un numéro de séquence précédent dans la suite de numéros de séquence, insertion dans chaque message émis par la liaison sécurisée d'un numéro de séquence sélectionné de manière à être situé dans la suite de numéros de séquence avant un numéro de séquence précédemment transmis par la liaison sécurisée, et comparaison du résultat de la fonction de hachage appliquée à un numéro de séquence reçu par la liaison sécurisée à un numéro de séquence précédemment reçu par la liaison sécurisée.

Selon un mode de réalisation, le procédé comprend des étapes consistant à : recueillir des données de paiement, et chiffrer les données de paiement à l'aide de la clé de chiffrement utilisée pour sécuriser la liaison entre le processeur graphique et le processeur sécurisé, mémoriser la clé de chiffrement par le processeur sécurisé, et mémoriser les données de paiement chiffrées par le processeur principal, lors d'une transaction de paiement, établir une liaison sécurisée entre le processeur graphique et un serveur de commerce électronique, et une liaison sécurisée entre le processeur graphique et le processeur sécurisé, authentifier l'utilisateur auprès du processeur sécurisé et transmettre par la liaison sécurisée avec le processeur sécurisé la clé de chiffrement des données de paiement, recevoir par le processeur graphique la clé de chiffrement des données de paiement et les données de paiement chiffrées, et déchiffrer les données de paiement, et transmettre les données de paiement par la liaison sécurisée avec le serveur de commerce électronique.

Selon un mode de réalisation, le recueil des données de paiement comprend des étapes consistant à : recueillir une photographie d'une carte de paiement et extraire de la photographie les données de paiement, ou bien présenter à l'utilisateur des premières données par le processeur graphique, recueillir des données à partir de commandes introduites par l'utilisateur au moyen de l'organe de commande, en relation avec les premières données, et transmettre les données recueillies au processeur graphique, et convertir par le processeur graphique les données recueillies en données de paiement à l'aide des premières données.

Selon un mode de réalisation, les données de paiement sont dans un format standard compréhensible par le serveur de commerce électronique, ou sont transmises à un serveur passerelle qui transmet les données de paiement au serveur de commerce électronique dans un format attendu par ce dernier.

Selon un mode de réalisation, le procédé comprend des étapes de chargement d'un programme dans une mémoire du processeur graphique, d'exécution du programme par le processeur graphique, de calcul d'une signature du contenu de la mémoire du processeur graphique tenant compte d'un code secret introduit par l'utilisateur et connu du processeur sécurisé, de transmission de la signature au processeur sécurisé, et de vérification que la signature reçue par le processeur sécurisé correspond à une signature mémorisée et modifiée en tenant compte du code secret connu du processeur sécurisé.

Des modes de réalisation concernent également un terminal comprenant un processeur principal, un processeur graphique contrôlant un écran d'affichage, et un organe de commande, le processeur graphique comprenant une mémoire non accessible de l'extérieur du processeur graphique. Le terminal est configuré pour mettre en oeuvre le procédé tel que précédemment défini.

Selon un mode de réalisation, l'organe de commande comprend une surface tactile transparente disposée sur l'écran d'affichage, ou comprend un clavier à touches.

Selon un mode de réalisation, le processeur sécurisé appartient à un serveur distant relié au terminal par l'intermédiaire d'un réseau de communication, ou bien est intégré dans une carte et connecté au processeur principal du terminal.

Des exemples de réalisation de l'invention seront décrits dans ce qui suit, à titre non limitatif en relation avec les figures jointes parmi lesquelles :
la figure 1 représente schématiquement un terminal classique en communication avec un serveur de transaction,
la figure 2 représente schématiquement un processeur graphique classique,
les figures 3 à 5 représentent des séquences d'étapes exécutées par le terminal et le serveur, selon des modes de réalisation,
les figures 6 et 7 représentent des séquences d'étapes exécutées par le terminal, selon des modes de réalisation,
les figures 8 et 9 représentent des séquences d'étapes exécutées par le terminal et un ou plusieurs serveurs distants, selon des modes de réalisation,
la figure 10 représente schématiquement un terminal classique relié à un processeur sécurisé dans un lecteur de carte.

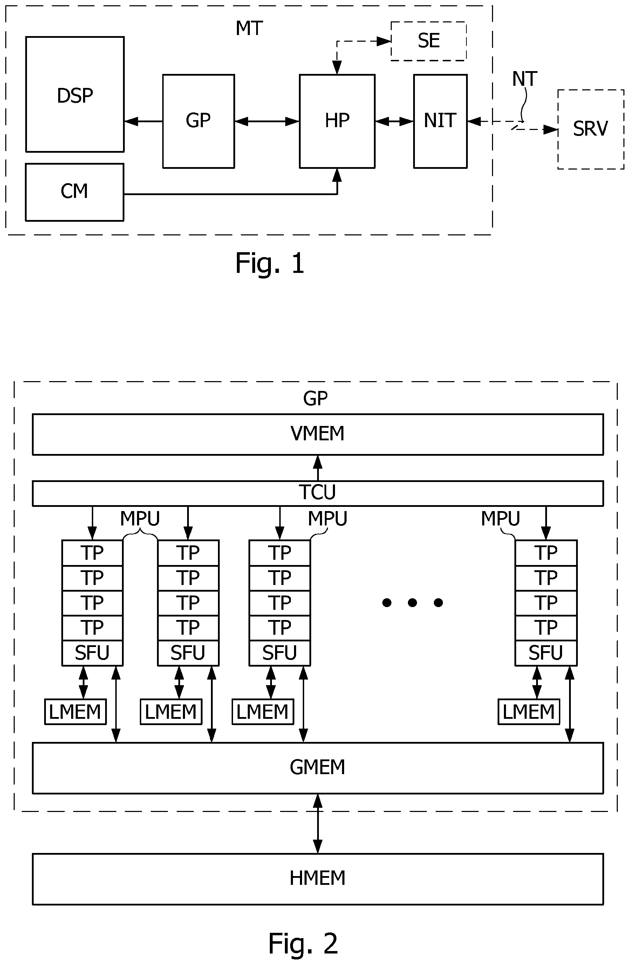

La figure 1 représente un terminal MT classique, susceptible de communiquer avec un serveur SRV par l'intermédiaire d'un réseau de transmission de données tel que le réseau Internet. Le serveur SRV peut être configuré pour conduire des transactions avec des terminaux auxquels il peut être connecté.

Le terminal MT est équipé de circuits de connexion avec un réseau tel que le réseau Internet. Le terminal MT est par exemple du type téléphone mobile notamment du type intelligent ou PDA (assistant personnel) ou tout autre type de dispositif, comme un ordinateur personnel équipé de circuits de connexion à un réseau tel que le réseau Internet. Le terminal MT comprend également un processeur principal HP, des circuits NIT de connexion à un réseau NT, connectés au processeur HP, un écran d'affichage DSP, un processeur graphique GP assurant la gestion de l'écran DSP, connecté au processeur HP, et un organe de commande CM connecté au processeur HP. L'organe de commande peut comprendre un clavier ou une surface tactile, par exemple une surface tactile transparente disposée sur l'écran DSP, et éventuellement un dispositif de pointage tel qu'une souris. Le processeur HP peut être le processeur principal du terminal ("Base band processor").

Le terminal peut comprendre également un processeur sécurisé SE qui peut être implanté dans une carte à circuit intégré UICC ("Universal Integrated Circuit Card"). Le processeur SE peut être par exemple de type carte SIM ("Subscriber Identity Module"), ou mini-SIM ou micro-SIM, permettant l'accès à un réseau de téléphonie mobile. Le processeur sécurisé peut comprendre un circuit NFC ("Near Field Communication") pour pouvoir communiquer avec une borne sans contact. Le circuit NFC peut être implanté dans une carte SIM (SIM-NFC) ou UICC, ou dans un circuit SoC ("System on Chip") ou dans une carte mémoire externe, par exemple de type "SD card". Les circuits NIT peuvent comprendre des circuits de radiotéléphonie donnant accès à un réseau de téléphonie mobile, et au réseau Internet par l'intermédiaire du réseau de téléphonie mobile, et/ou un circuit de connexion à un réseau sans fil (WiFi, Bluetooth), et/ou tout autre moyen de connexion avec ou sans fil à un réseau de transmission de données tel que le réseau Internet.

Le serveur SRV est configuré pour offrir des services de transaction à des utilisateurs. Il peut comprendre un dispositif de sécurité, un programme de gestion de services de transaction, et une zone mémoire dédiée au stockage de programme et de données de transaction. Le dispositif de sécurité protège le serveur et notamment l'accès à la zone mémoire dédiée aux données de transaction et au programme de gestion de services de transaction.

Dans ce qui suit, le terme "transaction" désigne généralement l'accès par un utilisateur à un service ou à des données, par l'intermédiaire d'une liaison, cet accès nécessitant une authentification de l'utilisateur.

La figure 2 représente un exemple de processeur graphique GP. Sur la figure 2, le processeur GP présente une architecture parallèle comprenant plusieurs unités de traitement multiples MPU. Chaque unité de traitement MPU comprend plusieurs processeurs de fil (thread processor) TP et une unité de fonctions spéciales SFU. Les unités SFU sont configurées pour exécuter des opérations peu fréquentes et coûteuses en ressources de calcul, telles que la division, la racine carrée, etc. Les processeurs TP d'une même unité MPU peuvent communiquer entre eux par l'intermédiaire d'une mémoire locale LMEM propre à l'unité MPU. En revanche, des processeurs TP appartenant à différentes unités MPU ne peuvent pas communiquer entre eux ou se synchroniser. Les processeurs TP d'une unité MPU n'ont donc pas accès aux mémoires locales LMEM des autres unités MPU du processeur GP.

Les unités MPU sont gérées par une unité de contrôle de d'exécution de fil (Thread Execution Control Unit) TPU. Le processeur GP comprend également une mémoire vidéo VMEM et une mémoire principale GMEM qui n'est pas accessible directement de l'extérieur du processeur GP. Réciproquement, la mémoire HMEM du processeur HP n'est pas directement accessible par le processeur GP. Les transferts de données entre les mémoires GMEM et HMEM sont cependant possibles par l'intermédiaire d'un port d'entrée / sortie du processeur GP et d'une procédure de type DMA (Direct Memory Access).

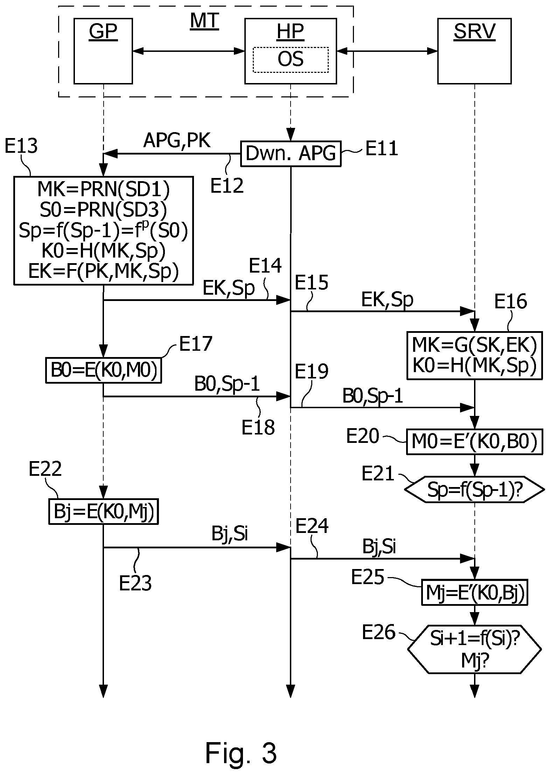

La figure 3 représente une séquence d'étapes exécutées à l'activation d'un programme spécifique de gestion de transaction sur le processeur HP du terminal MT. Cette séquence comprend des transferts de données entre les processeurs HP et GP, effectués par l'intermédiaire des mémoires GMEM et HMEM.

L'exécution du programme de gestion de transaction par le processeur HP comprend des étapes E11 à E26. A l'étape E11, le processeur HP charge un programme APG dans la mémoire HMEM. A l'étape E12 suivante, le programme APG est transféré de la mémoire HMEM à la mémoire GMEM du processeur GP. Durant cette étape, une clé publique PK du serveur SRV est également transférée dans la mémoire GMEM. Le programme APG comprend une fonction de génération de nombre aléatoire PRN, une fonction de chiffrement asymétrique F, par exemple RSA à 2048 bits, une fonction de chiffrement symétrique E, par exemple AES à 256 bits (AES-256) ou AES-512, et des fonctions de hachage f et H, par exemple de type SHA-1, SHA-256, SHA-224, SHA-384 ou SHA-512.

A l'étape suivante E13, le processeur GP exécute le programme APG comprenant des opérations d'exécution de la fonction PRN appliquée à un nombre SD1 appelé "graine", pour obtenir un nombre MK. Le nombre MK est utilisé par la suite comme clé secrète dite "maître" et mémorisé et confiné dans une zone mémoire du processeur GP non accessible de l'extérieur de ce dernier. La clé MK est mémorisée dans une mémoire locale LMEM et utilisée par le processeur GP tant que la mémoire LMEM, qui est volatile, n'est pas effacée, notamment en raison d'une mise hors tension du processeur GP. Une clé de session K0 est également calculée en appliquant une fonction de hachage H à la clé MK et à un nombre Sp qui peut être généré aléatoirement. Le processeur GP applique ensuite la fonction de chiffrement asymétrique F en utilisant la clé PK qu'il a reçue à l'étape E12, pour chiffrer la clé MK et le nombre Sp. A l'étape E14, la donnée chiffrée EK ainsi obtenue est transmise au processeur HP, puis retransmise par le processeur HP au serveur SRV à l'étape E15. A l'étape E16, le serveur SRV reçoit la donnée chiffrée EK, et la déchiffre en utilisant une clé privée SK correspondant à la clé publique PK, et qu'il est le seul à connaître. Cette opération de déchiffrement permet au serveur SRV d'obtenir la clé maitre MK et le nombre Sp. Connaissant la fonction H, le serveur SRV peut ensuite déterminer la clé de session K0 qui va être utilisée par le terminal MT, en appliquant la fonction H à la clé MK et au nombre Sp. Ainsi, le processeur GP et le serveur SRV sont les seuls à connaître la clé maître MK, la clé de session K0 et le nombre Sp. La clé de session K0 peut donc être utilisée par le processeur GP et le serveur SRV comme clé secrète pour chiffrer des messages échangés par un algorithme de chiffrement symétrique, et ainsi, sécuriser leurs échanges. La clé de session K0 est destinée à être utilisée durant une seule transaction. Si une nouvelle transaction doit être effectuée, sans que la mémoire du processeur GP ait été réinitialisée, une nouvelle clé de session peut être générée à partir de la clé maitre MK, que seuls le processeur GP et le serveur SRV connaissent.

A l'étape E17 suivant l'étape E14, le processeur GP génère un message M0. Chaque message Mj échangé entre le processeur et le serveur SRV comprend une entête et un corps de message. L'entête des messages peut comprendre une ou plusieurs variables d'état indiquant par exemple un état courant de transaction, une valeur de compteur, des informations de géolocalisation, des informations d'horodatage, une adresse IP, une adresse MAC, et des valeurs de commande à exécuter par le destinataire du message. Les informations d'entête peuvent être utilisées pour établir un lien du message reçu avec un message précédemment reçu pour une même transaction ou avec un utilisateur authentifié. Les informations d'entête peuvent également être utilisées pour procéder à des vérifications de cohérence, par comparaison avec des valeurs correspondantes précédentes. Le corps de message peut être absent ou comprendre des informations et/ou des commandes à transmettre entre le processeur GP et le serveur SRV. A l'étape E17, le message M0 est chiffré par la fonction de chiffrement symétrique E en utilisant la clé de session K0.

A l'étape E18, le message chiffré B0 = E(K0, M0) est transmis par le processeur GP au processeur HP. A l'étape E19, le processeur HP retransmet le message chiffré B0 au serveur SRV. A l'étape E20, le serveur SRV reçoit le message chiffré B0, et le déchiffre à l'aide d'une fonction cryptographique E' et de la clé K0, pour obtenir le message M0. Les fonctions E et E' peuvent être identiques ou différentes.

Les étapes E22 à E26 suivantes peuvent être exécutées périodiquement ou à chaque fois que des données sont transmises entre le processeur GP et le serveur SRV. A l'étape E22, le processeur GP détermine un message Mj à transmettre au serveur SRV, et chiffre le message Mj à l'aide de la fonction de chiffrement E et de la clé de session K0 pour obtenir un message chiffré Bj = E(K0,Mj). A l'étape E23, le processeur GP transmet le message chiffré Bj au processeur HP. A l'étape E24, le processeur HP reçoit et retransmet le message chiffré Bj au serveur SRV. A l'étape E25, le serveur SRV reçoit le message chiffré Bj et le déchiffre à l'aide de la fonction E' et de la clé K0. A l'étape E26 suivante, le serveur SRV vérifie le contenu du message Mj ainsi obtenu. Cette opération de vérification peut consister à vérifier la cohérence des données de l'entête du message Mj avec des données d'entête d'un message Mj-1 reçu précédemment, et éventuellement à vérifier les données du corps du message Mj. Si cette opération de vérification réussit, le serveur SRV considère qu'il est toujours en communication avec le terminal MT. En revanche, si cette opération de vérification échoue, le serveur SRV considère que la sécurité de la liaison avec le terminal MT est compromise et met fin à la transaction en cours.

Il est à noter que les étapes E22 à E26 peuvent être également ou alternativement exécutées à l'initiative du serveur SRV, c'est-à-dire que le serveur exécute les étapes E22, E23 et le processeur GP les étapes E25, E26, le processeur HP fonctionnant toujours comme relai entre le serveur SRV et le processeur GP. Ainsi, les étapes E22 à E26 peuvent être exécutées à l'initiative de l'un ou l'autre du processeur GP et du serveur SRV, lorsque celui-ci doit transmettre des données à l'autre.

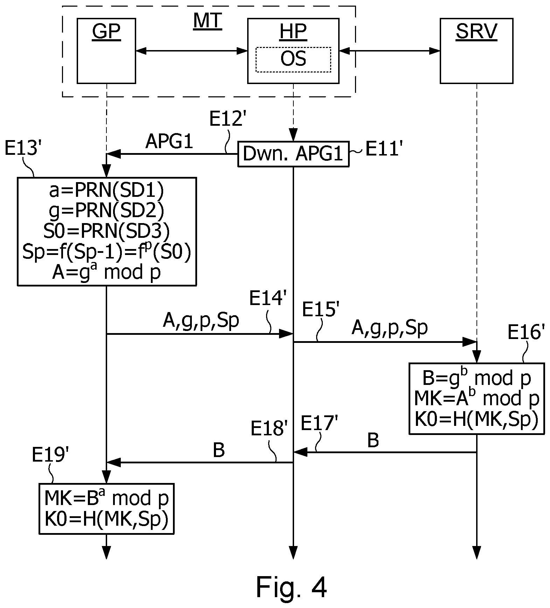

La clé maître MK peut être générée d'une autre manière, par exemple par un algorithme de Diffie Hellman. Ainsi, la figure 4 représente des étapes E11' à E19' exécutées par les processeurs GP, HP et le serveur SRV, en remplacement des étapes E11 à E16 de la figure 3. A l'étape E11', le processeur HP charge un programme APG1 dans la mémoire HMEM du processeur HP. A l'étape E12' suivante, le programme APG1 est transféré de la mémoire HMEM à la mémoire GMEM du processeur GP. Durant cette étape, la clé publique PK du serveur SRV est également transférée dans la mémoire GMEM. Le programme APG1 comprend les fonctions PRN, F, E, f, H, ainsi qu'une fonction d'exponentiation modulaire.

A l'étape suivante E13', le processeur GP exécute le programme APG1 comprenant des opérations d'exécution de la fonction de génération d'un nombre aléatoire appliquée à des valeurs de graine SD1, SD2, pour obtenir des nombres a, g. Les nombres a et g sont utilisés par le processeur GP pour générer une clé maître. Le processeur GP procède ensuite à un calcul d'exponentiation modulaire en élevant le nombre g à la puissance a modulo p. Le nombre p est par exemple fourni par le programme APG1. Le processeur GP applique également la fonction de chiffrement asymétrique F en utilisant la clé PK qu'il a reçue à l'étape E12', pour chiffrer un nombre Sp qui peut être généré aléatoirement.

Les nombres g et p, le résultat A du calcul d'exponentiation modulaire, ainsi que le résultat du chiffrement EK sont transmis au processeur HP à l'étape E14', puis retransmis par le processeur HP au serveur SRV à l'étape E15'. A l'étape E16', le serveur SRV reçoit ces données et calcule un nombre B en appliquant au nombre g un calcul d'exponentiation modulaire modulo p à une puissance b par exemple générée aléatoirement. Le nombre b permet également au serveur SRV d'obtenir une donnée secrète en élevant à la puissance b modulo p le nombre A reçu. Cette donnée secrète est partagée avec le processeur GP, et peut donc être utilisée par la suite comme une clé maitre MK. Le serveur SRV déchiffre la donnée chiffrée EK en utilisant une clé privée SK correspondant à la clé publique PK, qu'il est le seul à connaître. Cette opération de déchiffrement permet au serveur SRV d'obtenir le nombre Sp. Le serveur SRV détermine ensuite une clé de session K0 en appliquant la fonction H à la clé maitre MK et au nombre Sp. A l'étape suivante E17', le serveur SRV transmet le nombre B processeur HP. A l'étape E18' suivante, le nombre B est retransmis au processeur GP. A l'étape E19' suivante, le processeur GP reçoit le nombre B et calcule à son tour la clé maître MK en élevant à la puissance a modulo p le nombre B reçu. Le processeur GP calcule également la clé de session K0 en appliquant la fonction H à la clé MK et au nombre Sp. Ainsi, comme précédemment, le processeur GP et le serveur SRV sont les seuls à connaître la clé maître MK, la clé de session K0 et le nombre Sp.

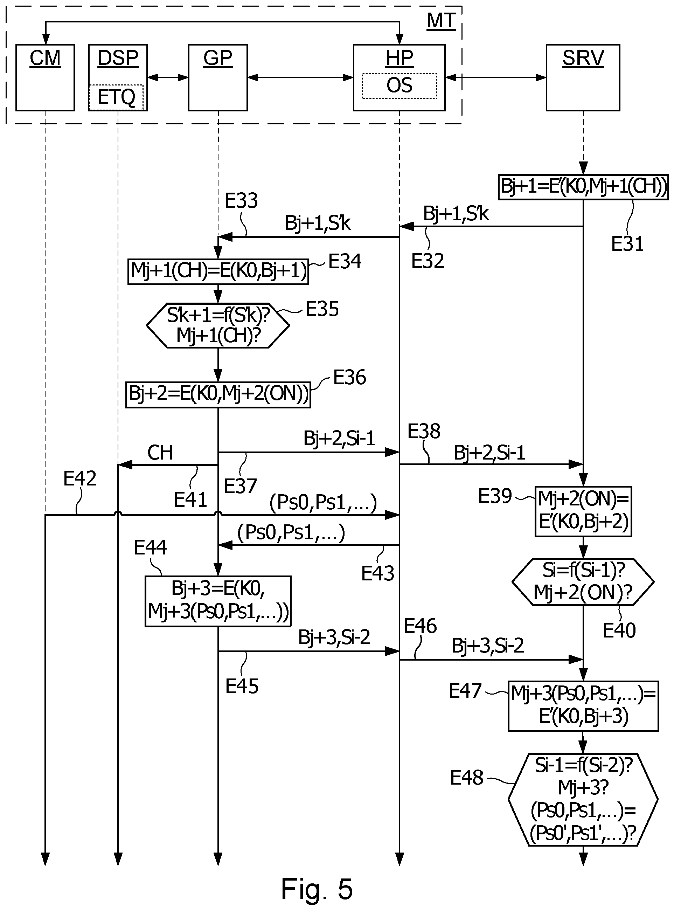

La figure 5 représente une séquence d'étapes E31 à E48 exécutées durant une transaction, à la suite de l'étape E20 ou E26 de la figure 3, ou de l'étape E19' de la figure 4. A l'étape E31, le serveur SRV détermine le contenu d'un message Mj+1 à envoyer au terminal MT, et chiffre le message Mj+1 à l'aide de la fonction E' et de la clé K0. Les données du corps du message Mj+1 comprennent des données de requête d'information secrète CH de l'utilisateur du terminal MT. Les données CH peuvent comprendre une image ou une séquence d'images à afficher à l'écran DSP du terminal MT. A l'étape E32, le serveur SRV transmet au terminal MT le message chiffré Bj+1 = E'(K0, Mj+1(CH)). A l'étape E33, le processeur HP reçoit le message chiffré Bj+1 et le retransmet au processeur GP.

A l'étape E34, le processeur GP reçoit le message chiffré Bj+1, et le déchiffre pour obtenir le message Mj+1(CH) = E(K0,Bj+1). A l'étape E35, le processeur GP vérifie la cohérence des données d'entête du message Mj+1, avec des données d'entête du message Mj précédemment reçu. Si les données d'entête du message Mj+1 sont cohérentes, le processeur GP détermine à l'étape E36 le contenu d'un message Mj+2 à envoyer au serveur SRV. Les données du corps du message Mj+2 comprennent un résultat de la vérification ON effectuée à l'étape E35. Le processeur GP chiffre le message Mj+2 (ON) à l'aide de la fonction E et de la clé de session K0. Aux étapes suivantes E37 et E41, le processeur GP transmet au processeur HP le message chiffré Bj+2 = E(K0,Mj+2(ON)) et affiche les données CH à l'écran DSP du terminal MT. A l'étape E38, le processeur HP transmet au serveur SRV le message chiffré Bj+2 reçu du processeur GP à l'étape E37. A l'étape E39, le serveur SRV déchiffre le message chiffré reçu Bj+2. A l'étape E40, le serveur SRV vérifie les données d'entête du message Mj+2 et notamment le résultat de la vérification ON, contenus dans le message déchiffré Mj+2. Si les données d'entête du message Mj+2 ne sont pas cohérentes avec les données d'entête du message précédent Mj+1 ou si le résultat de vérification ON révèle une erreur, le serveur SRV met fin à la transaction. Parallèlement, à la suite de l'affichage des données de requête d'information secrète CH, l'utilisateur est invité fournir une réponse à l'aide de l'organe de commande CM du terminal MT. A l'étape E42, l'utilisateur fournit une réponse sous la forme de données d'activation Ps0,Ps1,... comprenant par exemple une série de positions, et/ou de mouvements, et/ou de touches activées sur l'organe de commande CM. Les données Ps0,Ps1,... sont reçues par le processeur HP et transmises au processeur GP à l'étape E43.

L'étape suivante E44 correspond à l'étape E36, mais appliquée non pas au résultat de vérification ON, mais aux données d'activation Ps0, Ps1, .... A cette étape, le processeur GP détermine un message Mj+3 à envoyer au serveur SRV, comprenant les données d'activation Ps0,Ps1,..., et chiffre le message Mj+3. A l'étape E45, le processeur GP transmet au processeur HP le message chiffré obtenu Bj+3 = E(K0, Mj+3(Ps0,Ps1,...)). A l'étape E46, le processeur HP retransmet au serveur SRV le message chiffré Bj+3. A l'étape E47, le serveur SRV reçoit et déchiffre le message chiffré Bj+3, pour obtenir le contenu du message Mj+3. A l'étape E48, le serveur SRV vérifie les données d'entête du message Mj+3 déchiffré, ainsi que les données d'activation Ps0,Ps1,... contenues dans le corps du message Mj+3. Si ces vérifications ont échoué, le serveur SRV met fin à la transaction. Dans le cas contraire, il considère que l'utilisateur a été authentifié.

Le processeur HP peut ajouter à tous les messages transmis au serveur SRV dans les séquences d'étapes des figures 3 à 5, un identifiant du terminal tel qu'une adresse IP, une adresse MAC, ou bien un numéro de téléphone ou un numéro IMEI si le terminal est de type téléphone mobile. Ainsi, le serveur SRV peut identifier la provenance des messages reçus, et ainsi déterminer notamment la clé de session K0 à utiliser.

Selon un mode de réalisation, il est prévu à l'étape E13 ou E13' que le processeur GP exécute la fonction PRN appliquée à un nombre graine SD3 pour obtenir un nombre S0 utilisé par la suite comme un premier numéro d'une suite de numéros de séquence. Le processeur GP calcule ensuite successivement p numéros de séquence en appliquant la fonction de hachage f au premier numéro S0, puis en appliquant cette fonction au résultat obtenu, et en répétant cette dernière opération un certain nombre de fois. Le nombre p de numéros ainsi calculés peut être choisi aléatoirement et à une valeur de l'ordre de plusieurs centaines ou plusieurs milliers. Les p numéros de séquence ainsi calculés sont mémorisés dans une mémoire non accessible de l'extérieur du processeur GP. Le numéro de séquence Sp est transmis avec la clé maître chiffrée EK aux étapes E14 et E15. Chaque message Mi échangé entre le processeur GP et le serveur SRV est transmis avec un numéro de séquence Si égal ou généré à partir du numéro de séquence S0. A l'étape E17, le message M0 est transmis avec le numéro de séquence Sp-1 tel que Sp = f(Sp-1). Ainsi, à l'étape E21, le serveur SRV peut vérifier que le numéro de séquence Sp-1 reçu avec le message M0 permet d'obtenir le numéro de séquence Sp qu'il a reçu à l'étape E15. A l'étape E22, le processeur GP transmet avec le message Mj un numéro de séquence Si correspondant, dans la suite des numéros de séquence S0...Sp, au numéro de séquence précédent celui (Si+1) qui a été transmis au serveur SRV avec le dernier message transmis (Bj-1). A l'étape E26, le serveur SRV vérifie le numéro de séquence Si reçu en lui appliquant la fonction f et en comparant le résultat obtenu avec le numéro de séquence Si+1 précédemment reçu : Si+1 = f(Si).

De même, préalablement à l'étape 31, le serveur SRV peut aussi générer une suite de numéros de séquence S'k à partir d'un premier numéro de séquence S'0 généré aléatoirement et à l'aide de la fonction de hachage f. Le nombre de numéros de séquence de la suite est également choisi aléatoirement. Les numéros de séquence ainsi générés S'k sont transmis successivement dans l'ordre inverse de celui où ils ont été obtenus, avec chaque message émis par le serveur SRV. Durant une transaction, le processeur GP peut ainsi s'assurer que chaque message reçu provient bien du serveur SRV en vérifiant que le résultat de la fonction f appliqué au numéro de séquence reçu est égal au numéro de séquence précédemment reçu.

Compte tenu de la propriété de non réversibilité des fonctions de hachage, il est impossible de déterminer la fonction inverse d'une fonction de hachage, c'est-à-dire de déterminer le numéro de séquence Si à partir du numéro de séquence suivant Si+1, fourni par la fonction de hachage f appliqué au numéro Si. Cette utilisation des numéros de séquence Si offre un niveau de sécurité supplémentaire, en interdisant un programme malveillant exécuté par le processeur HP qui disposerait de la clé de session K0, de déterminer le numéro de séquence Si à partir du numéro de séquence précédemment transmis Si+1, et donc d'usurper l'identité du processeur GP vis-à-vis du serveur SRV, ou l'identité du serveur SRV vis-à-vis du processeur GP. Il est à noter que les numéros de séquence Si transmis peuvent être insérés dans les messages Mj et donc transmis sous forme chiffrée avec les messages Mj.

Cette utilisation des numéros de séquence Si qui sont modifiés et transmis dans chaque message transmis entre le processeur GP et le serveur SRV, peut être également utilisé pour générer une nouvelle clé de session à partir de la clé maitre MK et du numéro de séquence courant Si (Ki = H(MK,Si)) ou S'k (Kk = H(MK, S'k)). Ainsi, le terminal MT peut effectuer une nouvelle transaction, sans que le processeur GP ne doive générer une nouvelle clé maître MK, si celui-ci mémorise déjà une clé maître MK. La nouvelle transaction peut alors être exécutée directement à partir de l'étape E17 (figure 3) ou après l'étape E19' (figure 4). Au préalable le processeur GP et le serveur SRV génèrent une nouvelle clé de session Kj = H(MK,Sj) à partir de la clé maître MK qu'ils partagent et du dernier numéro de séquence Sj qui est connu à la fois du serveur SRV et du processeur GP. A noter qu'il peut également être décidé de changer de clé de session durant une transaction, la nouvelle clé de session étant calculée à partir d'un numéro de séquence courant.

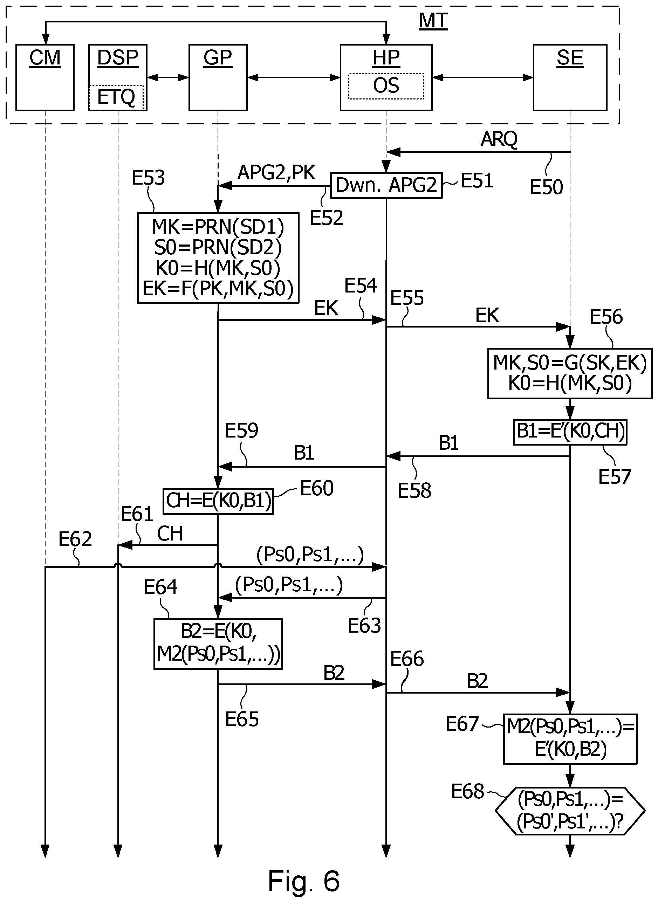

Dans un mode de réalisation, les processeurs HP, GP et SE du terminal MT sont configurés pour exécuter une procédure telle que celle représentée sur l'une des figures 3 à 5. Cette procédure peut être simplifiée conformément à la figure 6. Ainsi, la figure 6 représente une séquence d'étapes E50 à E68 permettant au processeur SE d'authentifier l'utilisateur du terminal MT sans qu'un code secret ne soit accessible du processeur HP. A l'étape E50, le processeur SE émet une requête d'authentification ARQ pour authentifier l'utilisateur. A l'étape E51 suivante, le processeur HP reçoit la requête ARQ et charge un programme APG2 dans la mémoire HMEM du processeur HP. A l'étape E52 suivante, le programme APG2 est transféré de la mémoire HMEM à la mémoire GMEM du processeur GP. Durant cette étape, une clé publique PK du processeur SE est également transférée dans la mémoire GMEM. Le programme APG2 comprend une fonction de génération de nombre aléatoire PRN, une fonction de chiffrement asymétrique F, par exemple RSA à 2048 bits, une fonction de chiffrement symétrique E, par exemple AES à 256 bits, et une fonction de hachage H, par exemple de type SHA-1.

A l'étape E53 suivante, le processeur GP exécute le programme APG2 comprenant des opérations d'exécution de la fonction de génération d'un nombre aléatoire PRN appliquée à des valeurs de graine SD1, SD2 pour obtenir des nombres MK et S0. Ces nombres sont mémorisés et confinés dans une zone mémoire du processeur GP non accessible de l'extérieur de ce dernier. Le nombre MK est utilisé par la suite comme une clé secrète maître. Une clé de session K0 est également calculée en appliquant une fonction de hachage H à la clé MK et au nombre S0. Le processeur GP applique également la fonction de chiffrement asymétrique F en utilisant la clé PK qu'il a reçue à l'étape E12, pour chiffrer la clé MK et le nombre S0. La donnée chiffrée EK ainsi obtenue est transmise à l'étape E54 au processeur HP, puis retransmise par le processeur HP au processeur SE à l'étape E55. A l'étape E56, le processeur SE reçoit la donnée chiffrée EK, et la déchiffre en utilisant une clé privée SK correspondant à la clé publique PK, qu'il est le seul à connaître. Cette opération de déchiffrement permet au processeur SE d'obtenir la clé maitre MK et le nombre S0. Connaissant la fonction H, le processeur SE peut ensuite déterminer la clé de session K0 utilisée par le processeur GP, en appliquant la fonction H à la clé MK et au nombre S0. La clé de session K0 est ainsi connue seulement du processeur SE et du processeur GP et peut donc être utilisée par ces derniers pour chiffrer des messages échangés et ainsi sécuriser leurs échanges. La clé de session K0 est destinée à être utilisée uniquement durant la procédure en cours d'exécution.

A l'étape E57 suivante, le processeur SE chiffre une requête d'information secrète CH à l'aide de la fonction E et de la clé de session K0. Les données CH peuvent comprendre une image ou une séquence d'images à afficher à l'écran DSP. A l'étape E58, le processeur SE transmet au processeur HP les données B1 = E(K0, CH). A l'étape E59, le processeur HP reçoit les données chiffrées B1 et les retransmet au processeur GP. A l'étape E60, le processeur GP reçoit les données chiffrées B1, et les déchiffre pour obtenir les données CH. A l'étape E61, le processeur GP affiche les données CH à l'écran DSP du terminal MT. L'utilisateur est ainsi invité fournir une réponse à l'aide de l'organe de commande CM du terminal MT. A l'étape E62, l'utilisateur fournit une réponse sous la forme d'une série de positions, et/ou de mouvements et/ou de touches Ps0,Ps1,... activées sur l'organe de commande CM. Ces données d'activation Ps0,Ps1,... sont reçues par le processeur HP et transmises au processeur GP à l'étape E63. A l'étape E64 suivante, le processeur GP reçoit les données d'activation Ps0,Ps1,..., et les chiffre le message à l'aide de la fonction E et de la clé K0. A l'étape suivante E65, le processeur GP transmet au processeur HP les données chiffrées obtenues B2 = E(K0,Ps0,Ps1,...). A l'étape E66, le processeur HP retransmet au processeur SE les données chiffrées B2. A l'étape E67, le processeur SE reçoit et déchiffre les données B2, pour obtenir les données d'activation Ps0,Ps1,.... A l'étape E68, le processeur SE vérifie les données d'activation Ps0,Ps1,.... Si cette vérification échoue, le processeur SE considère que l'utilisateur n'est pas authentifié. Dans le cas contraire, le processeur SE considère que l'utilisateur a été authentifié et peut donc donner accès à des services tels qu'un service d'accès à un réseau de téléphonie mobile. Il est à noter que chaque message transmis entre les processeurs GP et SE peut être accompagné d'un numéro de séquence Si correspondant à un numéro de séquence précédemment transmis Si+1, tel que Si+1 = f(Si), f étant une fonction de hachage telle que SHA-1.

La mise en oeuvre du processeur GP durant la séquence d'étapes E50 à E58 permet d'éviter qu'un code secret transite par le processeur HP susceptible d'exécuter un programme malveillant. En effet, durant les étapes E50 à E58, le processeur HP n'a pas accès aux données de requête d'authentification, et peut être incapable de donner une signification aux données d'activation Ps0,Ps1,... introduites par l'utilisateur, si les données de requête d'authentification sont définies à partir d'une variable aléatoire.

Il est à noter que la séquence d'étapes E50 à E68 peut être simplifiée en utilisant directement la clé MK comme clé de chiffrement aux étapes E57, E60, E65 et E67.

Si les données de requête d'information secrète CH sont transmises sans pouvoir être accessibles au processeur HP, les données d'activation Ps0,Ps1,... peuvent ne pas être transmises sous forme chiffrée et donc peuvent être transmises directement à l'étape E59 au processeur SE.

Le processeur GP peut être configuré pour déterminer des données d'authentification à partir des données d'activation Ps0,Ps1,... à l'étape E44 ou E64 (en fonction des données CH). Dans, ce cas, le processeur GP insère ces données d'authentification dans le message Mi+2 ou B2 à la place des données Ps0,Ps1,....

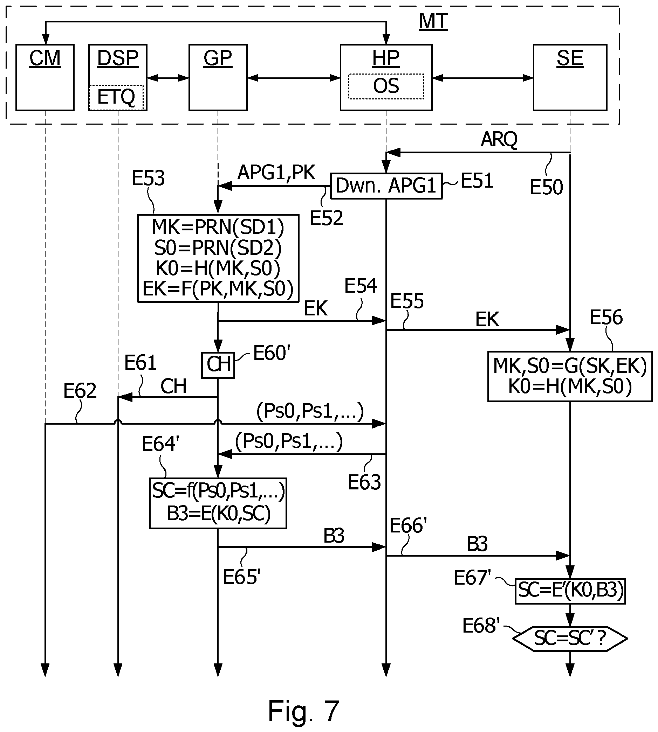

La figure 7 représente une séquence d'étapes qui diffère de celle de la figure 5, en ce que les données de requête d'information secrète CH sont directement générées par le processeur GP. Ainsi, la séquence d'étapes de la figure 7 diffère de celle de la figure 6, en ce que les étapes E57 à E59 sont supprimées, et les étapes E60 et E64 à E68 sont remplacées par des étapes E60' et E64' à E68'. A l'étape E60', le processeur GP génère les données CH. A l'étape E64', le processeur GP détermine un code secret SC à partir des positions activées Ps0,Ps1,..., et des données CH, et chiffre le code SC à l'aide de la fonction E et de la clé K0. Aux étapes E65 et E66, la donnée chiffrée obtenue B3 est transmise au processeur SE par l'intermédiaire du processeur HP. Aux étapes E67' et E68', le processeur SE déchiffre la donnée B3 pour obtenir le code secret SC, et compare le code SC à une valeur attendue SC'.

Il est à noter que si le processeur sécurisé SE requiert une nouvelle authentification, et si les processeurs GP et SE mémorisent déjà une clé maître partagée MK, l'authentification peut être effectuée sans générer une nouvelle clé maître. La nouvelle authentification peut alors être exécutée directement à partir de l'étape E57 (figure 6) ou à l'étape E60' (figure 7). Au préalable, le processeur GP et le processeur SE génèrent une nouvelle clé de session K1 = H(MK,S1) à partir de la clé maître MK et d'un numéro de séquence S1=f(S0) calculé en fonction du numéro de séquence S0 qui est connu à la fois du processeur SE et du processeur GP.

Dans les séquences d'étapes des figures 5 à 7, il importe que ni les données CH, ni les données Ps0,Ps1,... saisies par l'utilisateur ne permettent à elles seules de déterminer des données d'authentification de l'utilisateur auprès du serveur SRV ou du processeur SE, et que seule la connaissance à la fois des données CH et des données Ps0,Ps1,... ou des données d'authentification correspondant aux données Ps0,Ps1,..., permet d'authentifier l'utilisateur.

Selon un mode de réalisation, les données d'activation Ps0,Ps1,... saisies par l'utilisateur à l'étape E42 comprennent un code d'activation à usage unique reçu par un autre canal de transmission (tel que SMS, serveur Web, courrier électronique ou postal). Ce code d'activation peut être une séquence de caractères alphanumériques ou une séquence d'icones ou d'images, ou une combinaison de ces éléments. Dans le cas où ce code d'activation est fourni par un serveur Web par l'intermédiaire d'une connexion Internet, ce code peut être un code optique à une ou deux dimensions, qui peut être saisi par le terminal MT si celui-ci dispose d'un capteur d'image. Les données d'authentification Ps0,Ps1,... peuvent également comprendre une photographie d'identité de l'utilisateur ou toute autre information biométrique telle qu'une empreinte digitale si le terminal dispose d'un lecteur de telles empreintes. Les données de requête d'information secrète CH affichées par le processeur GP comportent alors simplement une image affichée à l'écran DSP invitant l'utilisateur à introduire les données d'identification requises.

Selon un mode de réalisation, les données CH comprennent une séquence d'images, et il est prévu de programmer le processeur GP pour que celui-ci affiche cette séquence d'images de manière à ce qu'elle ne puisse pas être capturée par un programme malveillant exécuté par le processeur HP. A cet effet, le serveur SRV ou le processeur SE et le processeur GP peuvent mettre en oeuvre un procédé basé sur un algorithme de cryptographie visuelle. Un tel algorithme est par exemple décrit dans les documents "Visual Cryptography", Moni Naor, Adi Shamir, Eurocrypt 94, et "Contruction and Bounds for Visual Cryptography", G. Ateniese, C Blundo, A. De Santis, G. G. Stinson. Cet algorithme consiste à décomposer une image d'origine, par exemple intelligible humainement, en plusieurs images source de mêmes dimensions que l'image d'origine, de telle manière que l'image d'origine ne puisse être restituée qu'en superposant toutes les images source, issues de la décomposition, et qu'il soit très difficile de reconstituer l'image d'origine en l'absence de l'une quelconque des images sources.

Selon un mode de réalisation, chaque image de la séquence d'images à afficher est décomposée en plusieurs images source qui sont affichées à l'écran par le processeur GP, non pas simultanément en étant superposées, mais d'une manière successive. La rémanence rétinienne de l'utilisateur est exploitée pour que ce dernier puisse reconstituer chacune des images de la séquence.

Selon un mode de réalisation, la séquence d'images comporte des images différentes et est transmise au processeur GP sous la forme d'une séquence de n images, chaque image étant décomposée en m images source. Le processeur GP regroupe les m images source de chaque image en plusieurs trames, par exemple en deux ou trois trames, qu'il affiche successivement à l'écran. Dans l'exemple de deux trames par image de la séquence d'image, la première des deux trames résulte par exemple de l'addition de x images source de l'image et la seconde trame résulte de l'addition des m-x autres images source de l'image. La sélection des images source formant chaque trame peut être effectuée aléatoirement. Le processeur GP affiche chaque trame ainsi générée pendant une durée t. Pour exploiter la rémanence rétinienne, la durée F·t peut être inférieure à 15 ms, F étant le nombre de trames affichées pour chaque image de la séquence.

Cette disposition permet d'éviter qu'un programme malveillant exécuté par le processeur HP puisse récupérer les images de la séquence par copie d'écran. Il peut être prévu que le programme exécuté par le processeur GP commande l'effacement d'une trame dans la mémoire vidéo VMEM lorsqu'une trame suivante est affichée.

Ce mode d'affichage d'une séquence d'images peut être exploité pour afficher par exemple un clavier dans lequel les touches sont agencées les unes par rapport aux autres dans un ordre aléatoire. Le clavier affiché permet à l'utilisateur d'introduire un code secret sous la forme d'une séquence de caractères alphanumériques ou d'icones. Dans ce cas, les images de la séquence d'image présentent toutes un même clavier, mais sont décomposées de manières différentes en trames inintelligibles qui sont affichées successivement par le processeur GP. Pour obtenir un plus haut niveau de sécurité, il peut être prévu de régénérer plusieurs fois les images source de l'image du clavier, de manière à ce que chaque image source ne soit figure qu'un nombre limité de fois par exemple une seule fois dans les trames qui sont affichées successivement. Pour limiter la puissance de calcul nécessaire à la décomposition de l'image du clavier en images source, il peut être prévu que l'image du clavier soit décomposée en une image rassemblant seulement la forme des touches du clavier et une image rassemblant seulement les libellés des touches du clavier, seule l'image des libellés des touches du clavier étant décomposée en images sources inintelligibles séparément, regroupées en différentes trames qui sont affichées successivement. Le code secret peut être saisi au moyen d'un écran tactile superposé sur l'écran d'affichage ou au moyen d'un clavier, les images affichées indiquant alors simplement la correspondance entre des caractères du code secret à introduire et des touches du clavier.

De cette manière, si un programme malveillant exécuté par le processeur HP peut avoir accès à la position de zones ou de touches activées par l'utilisateur lors de la saisie d'un code secret, il ne peut pas en procédant à des copies d'écran successives, déterminer à quels caractères alphanumériques correspondent les zones ou touches activées. En effet, l'activation de la fonction de copie d'écran n'est généralement pas suffisamment rapide pour acquérir toutes les trames d'une telle séquence d'images, et le processeur GP peut être configuré pour afficher les trames à une cadence supérieure à celle à laquelle une fonction de copie d'écran peut être activée et effacer les trames au fur et à mesure qu'elles sont affichées et remplacées par une nouvelle trame à l'écran d'affichage.

Les données de requête d'information secrète CH peuvent également comprendre un modèle d'objet en trois dimensions, le processeur GP affichant à un instant donné une vue de cet objet, et modifiant l'angle de vue de l'objet en fonction de commandes introduites par l'utilisateur par l'intermédiaire de l'organe de commande CM. Les déplacements de l'objet en relief ainsi commandés par l'utilisateur permettent de déterminer le code secret introduit par l'utilisateur. Par exemple, l'objet en trois dimensions affiché peut être un cube dont les faces sont numérotées, que l'utilisateur peut faire tourner pour faire apparaître les chiffres d'un code secret. Les données d'activation peuvent alors comprendre les commandes de manipulation introduites par l'utilisateur et des commandes de validation d'une sélection de face du cube.

Les positions activées ou les déplacements introduits par l'utilisateur sont envoyés sous forme chiffrée par le processeur GP au serveur SRV ou au processeur SE par l'intermédiaire du processeur HP (étapes E45, E46, E65, E66). Le serveur SRV (figure 5), (ou le processeur SE - figure 6 -, ou encore le processeur GP - figure 7) qui dispose de la séquence d'images affichées CH peut alors déterminer à quelle séquence de caractères alphanumériques correspondent les positions activées ou les déplacements introduits par l'utilisateur, et donc le code secret ainsi saisi par l'utilisateur. Si le code secret saisi correspond à un code secret attendu, le serveur SRV, ou le processeur SE, peut considérer que l'utilisateur a été authentifié.

Selon un autre mode de réalisation, les données CH comprennent un ensemble de plusieurs images, dont certaines sont des zones d'image source d'une image intelligible, au sens de la cryptographie visuelle. Les zones d'image source appartenant à l'ensemble d'images CH sont complémentaires d'une zone de l'image imprimée sur une étiquette semi transparente ETQ remise à l'utilisateur et à disposer sur une zone de l'écran d'affichage du terminal. Ainsi, chaque zone d'image source lorsqu'elle est superposée avec l'étiquette ETQ forment une zone d'image intelligible pour l'utilisateur. L'utilisateur est invité à disposer son étiquette ETQ sur une zone de l'écran où peuvent être affichées les images de l'ensemble d'images, et à commander à l'aide de l'organe de commande CM le déplacement des images affichées. Lorsqu'il peut observer une zone d'image intelligible à l'écran DSP, ce qui signifie que l'image affichée est une image source de l'image intelligible, au sens de la cryptographie visuelle, il est invité à introduire une commande de validation. Les commandes de déplacement et de validation Ps0,Ps1,... activées par l'utilisateur permettent de déterminer parmi l'ensemble d'images affichées CH quelles sont les images sélectionnées par l'utilisateur. Si les images ainsi sélectionnées par l'utilisateur correspondent bien à des zones d'image source de l'image intelligible, il peut être considéré que l'utilisateur possède bien une étiquette sur laquelle est imprimée l'image complémentaire des zones d'image source de l'ensemble d'images CH. Si l'étiquette ETQ remise à l'utilisateur est unique, il peut être considéré que l'utilisateur a été authentifié. Bien entendu, l'étiquette est réalisée dans un film suffisamment fin pour ne pas empêcher l'utilisation de la partie de la surface tactile sur l'écran d'affichage, recouverte par l'étiquette.

L'image intelligible peut présenter une photographie en noir et blanc ou en couleurs, ou une séquence de caractères alphanumériques. Chaque partie d'image source peut faire apparaître avec l'image figurant sur l'étiquette ETQ de l'utilisateur un ou plusieurs caractères alphanumériques.

Selon un autre mode de réalisation, l'image intelligible peut comprendre plusieurs pictogrammes correspondant chacun à un afficheur à plusieurs segments dont tous les segments sont "affichés". Ainsi chaque pictogramme peut être le caractère "8" dans le cas d'un afficheur à sept segments. L'image imprimée sur l'étiquette ETQ remise à l'utilisateur est une image source de cette image intelligible comportant un certain nombre de ces pictogrammes. Par ailleurs, l'ensemble d'images CH affichées par le processeur GP comprend une ou plusieurs images permettant de faire apparaître certains des segments des pictogrammes de l'image intelligible. L'utilisateur est invité à disposer son étiquette ETQ sur une zone de l'écran où peut être affichée chaque image de l'ensemble d'images CH, et à introduire au moyen du clavier CM du terminal les caractères qu'il voit apparaître en fonction des segments qui apparaissent à l'écran au travers de son étiquette ETQ. Si les caractères introduits par l'utilisateur correspondent à ceux attendus compte tenu de l'ensemble d'images CH, cela signifie que l'utilisateur possède bien l'étiquette ETQ complémentaire des images sources affichées. Il est à noter que les caractères introduits par l'utilisateur correspondent à un code secret à usage unique, sachant qu'un ensemble d'images à afficher CH peut faire apparaître avec une seule étiquette n'importe quelle séquence de caractères, compte tenu du mode de présentation choisi, analogue à celui d'un afficheur à segments (par exemple à 7 segments).

Le serveur SRV, ou le processeur SE, peut ainsi authentifier l'utilisateur si celui-ci est le seul à disposer d'une étiquette ETQ sur laquelle figure l'image source complémentaire. Le code introduit par l'utilisateur peut être à usage unique, de sorte que même si un programme malveillant exécuté par le processeur HP récupère ce code, il ne peut pas l'utiliser ultérieurement pour s'authentifier frauduleusement à la place de l'utilisateur. L'image source ou les parties d'image source CH peuvent être déterminées par le serveur SRV ou le processeur SE à partir de l'image figurant sur l'étiquette ETQ remise à l'utilisateur.

Selon un mode de réalisation, les données CH comprennent une séquence audio source, et il est prévu de mettre en oeuvre un procédé basé sur un algorithme de cryptographie audio similaire à un algorithme de cryptographie visuelle. Un tel algorithme est par exemple décrit dans le document "Simple Audio Cryptography", Yusuf Adriansyah. Cet algorithme consiste à décomposer une séquence audio d'origine en plusieurs séquences audio source de même durée que la séquence audio d'origine, de telle manière que la séquence audio d'origine ne peut être restituée qu'en diffusant simultanément toutes les séquences audio source, issues de la décomposition, et qu'il soit très difficile de reconstituer la séquence audio d'origine en l'absence de l'une quelconque des séquences audio source. Il peut être prévu de diffuser simultanément deux séquences audio source, l'une par le terminal MT et l'autre par un dispositif portable muni d'une mémoire pour mémoriser une séquence audio source et d'une oreillette pour diffuser la séquence audio source mémorisée sans qu'elle puisse être captée par un microphone du terminal. Si l'utilisateur perçoit un message audio intelligible en diffusant simultanément les deux séquences audio source, cela signifie que la séquence audio source diffusée par le dispositif portable est complémentaire de la séquence audio source appartenant aux données CH transmises par le serveur SRV ou le processeur SE.

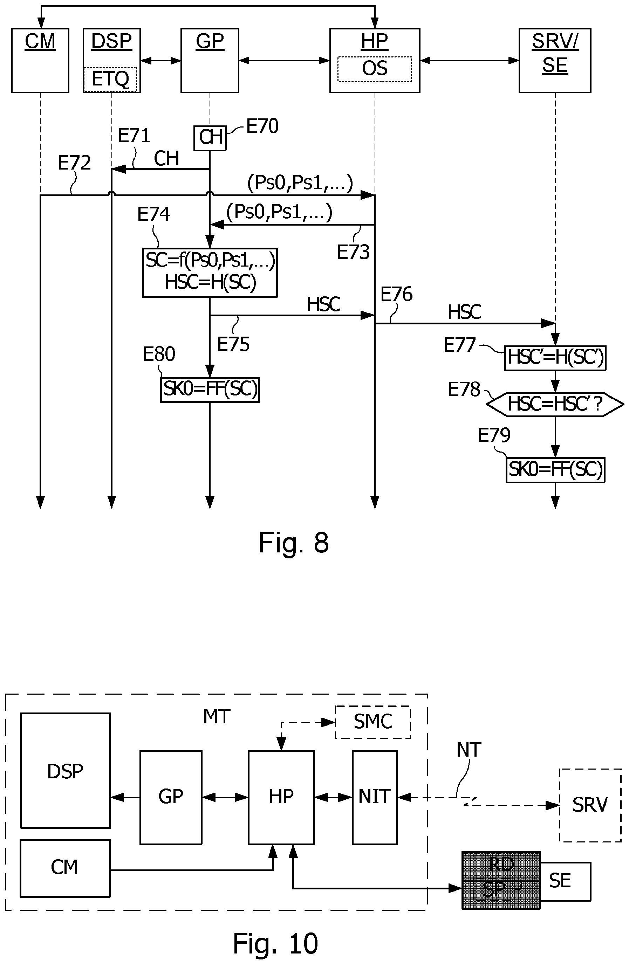

La clé maître MK peut être également générée sans utiliser d'algorithme de chiffrement asymétrique qui nécessite généralement des moyens de calcul plus importants que les algorithmes de chiffrement symétriques. A cet effet, la séquence d'étapes E70 à E79 représentée sur la figure 8 peut être exécutée. A l'étape E70, des données de requête d'information secrète CH sont générées par le processeur GP pour permettre à l'utilisateur d'introduire un code secret. Les données CH sont affichées à l'écran DSP à l'étape E71. Comme précédemment décrit, les données CH peuvent comprendre une séquence d'images intelligibles pour un utilisateur, chaque image intelligible étant décomposée en plusieurs images sources, au sens de la cryptographie visuelle, chaque image source étant inintelligible pour un utilisateur. Chaque image intelligible peut représenter un clavier dont les touches sont réparties dans un ordre aléatoire. A l'étape E72, un code secret est saisi par l'utilisateur à l'aide de l'organe de commande CM. Le code secret SC est connu du serveur SRV ou du processeur SE et permet d'authentifier l'utilisateur. A l'étape E73, les commandes Ps0,Ps1,... introduites par l'utilisateur sont transmises par le processeur HP au processeur GP. A l'étape E74, le processeur GP détermine le code secret SC introduit par l'utilisateur en fonction des commandes Ps0,Ps1,... introduites par l'utilisateur et en fonction du contenu des images intelligibles affichées à l'étape E71. A l'étape E74, le processeur applique une fonction de hachage H, par exemple du type SHA-1, au code secret SC pour obtenir un code dérivé HSC. Aux étapes E75, E76, le code dérivé HSC est transmis au serveur SRV ou au processeur SE par l'intermédiaire du processeur HP. A l'étape E77, le calcule un code dérivé HSC' en appliquant la fonction de hachage H à un code secret SC' préalablement mémorisé en association avec des informations d'identification de l'utilisateur. A l'étape E78, le serveur SRV ou le processeur SE compare le code dérivé HSC reçu au code dérivé calculé HSC'. Si ces deux codes dérivés sont identiques, le serveur SRV ou le processeur SE considère que l'utilisateur a été authentifié et exécute l'étape E79 où il calcule une clé secrète SK0 en fonction du code secret SC. A l'étape E80, le processeur GP calcule également la clé SK0 en appliquant la même fonction au code secret SC. Le processeur GP ou le serveur SRV (ou le processeur SE) peut ensuite générer une clé maître MK qu'il transmet à l'autre sous forme chiffrée à l'aide de la clé SK0. La clé MK peut être générée aléatoirement. A l'étape E78, si les codes dérivés HSC et HSC' sont différent, le serveur SRV ou le processeur SE peut transmettre au processeur GP par l'intermédiaire du processeur HP un message de compte rendu de vérification. Si la vérification a échoué, le processeur GP met fin à la procédure exécutée, sinon, le processeur GP exécute l'étape E80. La clé SK0 peut par exemple être déterminée en appliquant une fonction de hachage FF au code secret SC ainsi partagé par le processeur GP et le serveur SRV ou le processeur SE. La clé SK0 ou la clé maître MK peut également être générée en mettant en oeuvre l'algorithme décrit dans le document "Simpler Session-Key Generation from Short Random Passwords", Minh-Huyen Nguyen, Salil Vadhan, Nov. 10, 2006.

Il est à noter que la séquence d'étapes représentée sur la figure 8 peut être également mise en oeuvre à l'aide d'une étiquette semi transparente à poser sur l'écran d'affichage DSP, telle que celle décrite précédemment. Dans ce cas, les données CH sont préalablement transmises non chiffrées par au processeur GP. A l'étape E78, le serveur SRV ou le processeur SE vérifie que les données Ps0,Ps1,... saisies par l'utilisateur correspondent à des données attendues, compte tenu de l'étiquette ETQ dont dispose l'utilisateur qui est connue seulement du serveur SRV ou du processeur SE.

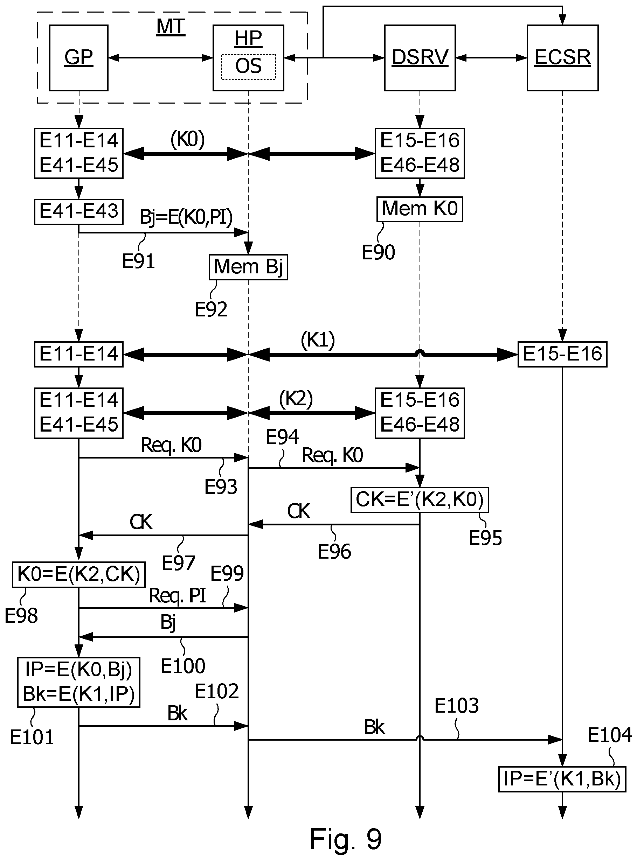

Selon un mode de réalisation, le procédé d'établissement d'une liaison sécurisée en le processeur GP et un serveur peut être utilisé pour conserver des informations de paiement d'une manière sécurisée, et pour utiliser ces informations de paiement lors d'une transaction de paiement engagée avec un serveur de commerce électronique. La figure 9 représente des séquences d'étapes qui peuvent être exécutées pour sauvegarder des informations de paiement et pour transmettre des informations de paiement à un serveur de commerce électronique. Sur la figure 9, le programme APG chargé dans le processeur GP peut être configuré pour générer une clé de session commune K0 avec un serveur dédié DSRV, conformément aux étapes E11 à E16 ou E11' à E19', puis ensuite, pour authentifier l'utilisateur conformément aux étapes E41 à E48. Les informations de paiement PI peuvent être ensuite introduites par l'utilisateur, par exemple en adaptant à cet effet les étapes E41 à E43 ou E61 à E63, pour qu'elles ne soient pas accessibles directement au processeur HP, même si ces informations sont introduites au moyen de l'organe de commande CM. Les informations de paiement peuvent être des informations de carte de paiement ou de compte bancaire (relevé d'identité bancaire) qui sont normalement saisies pour effectuer un virement ou un paiement en ligne. Il peut également être prévu que les informations PI soient introduites sous la forme d'une photographie d'une carte de paiement ou d'un relevé d'identité bancaire, qui peut être prise par le terminal MT si celui-ci est équipé d'un appareil photographique. Une fonction de reconnaissance de caractères imprimés peut ensuite être mise en oeuvre pour déterminer les informations figurant sur la photographie de la carte de paiement. Les informations ainsi saisies PI sont chiffrées à l'aide de la clé de session K0 et transmises sous forme chiffrée au processeur HP (étape E91) qui les mémorise (étape E92). De son côté, le serveur dédié mémorise la clé de session K0 comme clé de déchiffrement des informations de paiement de l'utilisateur préalablement authentifié (étape E90). La clé de session est donc mémorisée en association avec des informations d'identification de l'utilisateur.

Lors d'une transaction de paiement avec un serveur de commerce électronique ECSR, le processeur GP génère et partage une clé de session K1 avec le serveur ECSR en exécutant les étapes E11 à E16 ou E11' à E19' avec ce dernier. Le processeur GP exécute également avec le serveur dédié DSRV, les étapes (E11 à E16 ou E11' à E19') de génération d'une clé de session commune K2, et les étapes E41 à E48 d'authentification de l'utilisateur. Le processeur GP transmet ensuite au serveur DSRV une requête de clé pour pouvoir déchiffrer les informations de paiement mémorisées par le terminal MT (étapes E93, E94). Le serveur DSRV transmet en réponse au processeur GP (étapes E95, E96, E97) la clé K0 chiffrée avec la clé de session K2 (E(K2, K0)). A l'étape E98, le processeur GP déchiffre la clé K0 à l'aide de la clé de session K2. Le processeur GP demande ensuite au processeur HP les informations de paiement chiffrées (étape E99). Le processeur GP reçoit ces informations à l'étape E100, les déchiffre avec la clé K0 obtenue du serveur DSRV et les chiffre avec la clé de session K1 à l'étape E101. Ensuite le processeur GP transmet au serveur ECSR les informations de paiement chiffrées Bk (étapes E102, E103). A l'étape E104, le serveur ECSR déchiffre les informations de paiement IP. Le serveur de commerce électronique ESCR peut ainsi valider une transaction de paiement initiée précédemment, par exemple lors de la génération de la clé de session K1. Les informations de paiement peuvent être mémorisées dans un format standard, par exemple le standard ECML (défini par le document RFC 4112). Si le serveur ECSR n'est pas compatible avec ce format, un serveur passerelle peut être mis en oeuvre pour recevoir les informations de paiement au format ECML émises par le processeur GP, et pour les retransmettre dans un format spécifique au serveur ECSR. Bien entendu, comme précédemment décrit, chaque message transmis entre le processeur GP et les serveurs DSRV et ECSR peuvent être accompagné d'un numéro de séquence Si, et donner lieu à la réception à une vérification à l'aide du numéro de séquence Si+1 précédemment reçu.

Dans la séquence d'étapes E90 à E104, les informations de paiement ne sont jamais accessibles en dehors du processeur GP et du serveur ECSR. Il est à noter que le processeur sécurisé SE du terminal peut également jouer le rôle du serveur dédié DSRV pour mémoriser une clé de chiffrement et la transmettre d'une manière sécurisée au processeur GP.

Le programme APG, APG1, APG2 transmis par le processeur HP au processeur GP et exécuté par le dernier, peut être sécurisé contre un remplacement par un programme malveillant, par exemple par un calcul de signature de la mémoire ou des mémoires du processeur GP dans lequel le programme est chargé, la signature calculée étant modifiée par un code secret saisi par l'utilisateur et connu du serveur SRV ou du processeur SE. La signature ainsi modifiée est transmise par le processeur GP au serveur SRV ou au processeur SE qui mémorise une table de valeurs attendues de signature du programme en fonction du type de terminal MT. Connaissant le code secret et la valeur de signature attendue, le serveur SRV ou le processeur SE peut calculer une valeur modifiée attendue et la comparer avec celle reçue du processeur GP, et ainsi vérifier que le programme chargé dans la mémoire du processeur GP n'est pas un programme malveillant.

Il apparaîtra clairement à l'homme de l'art que la présente invention est susceptible de diverses variantes de réalisation et diverses applications. En particulier, le processeur SE n'est pas nécessairement intégré au terminal MT, mais peut être intégré dans une carte à puce et être relié au processeur HP par l'intermédiaire d'un lecteur de carte connecté sur un port du terminal MT. Ainsi, la figure 10 représente un lecteur de carte RD dans lequel est engagé le processeur SE intégré dans une carte. Le terminal MT peut comprendre une carte à puce SMC telle qu'une carte SIM. Bien entendu, le lecteur RD peut ne pas être nécessaire si le processeur SE est associé à des moyens de connexion ou de transmission permettant d'établir une liaison avec le terminal MT (liaison USB, Bluetooth, port audio).

Selon un autre mode de réalisation, le lecteur de carte RD peut comprendre un processeur sécurisé SP assurant la gestion des communications entre le processeur SE et le processeur HP, et en particulier, l'établissement d'une liaison sécurisée avec le processeur GP. Le processeur sécurisé SP peut également assurer la génération et la transmission des données de requête CH (étape E31). Le processeur sécurisé SP peut également exécuter les étapes E39, E40, E47 et E48, le processeur SE vérifiant les données d'activation Ps0, Ps1, ... fournies par l'utilisateur. Si une étiquette telle que l'étiquette ETQ est utilisée, l'image qu'elle supporte peut être connue seulement du processeur SP.

Par ailleurs, l'invention n'est pas limitée aux séquences d'étapes précédemment décrites, mais couvre également les combinaisons de ces séquences d'étapes. Ainsi, dans les séquences représentées sur les figures 5 à 9, certaines des étapes exécutées par le serveur SRV, DSRV peut être exécutées par le processeur SE ou SP. Réciproquement, certaines des étapes exécutées par le processeur SE peuvent être exécutées par le serveur SRV ou DSRV.

## Revendications

1. Procédé de transaction comprenant des étapes consistant à :
prévoir un terminal (MT) comprenant un processeur principal (HP), un processeur graphique (GP) contrôlant un écran d'affichage (DSP), et un organe de commande (CM), le processeur graphique comprenant une mémoire (LMEM) non accessible de l'extérieur du processeur graphique,
établir une liaison entre le processeur graphique et un processeur sécurisé (SRV, SE), par l'intermédiaire du processeur principal, la liaison étant sécurisée au moyen d'une clé de chiffrement (K0) partagée uniquement par le processeur graphique et le processeur sécurisé, et non accessible de l'extérieur du processeur graphique et du processeur sécurisé,
présenter à l'utilisateur des premières données (CH),
recueillir des secondes données (Ps0,Ps1,..., SC), à partir de commandes (Ps0,Ps1,...) introduites par l'utilisateur au moyen de l'organe de commande (CM), en relation avec les premières données,
transmettre les secondes données au processeur sécurisé,
authentifier l'utilisateur à partir des secondes données, et
si l'utilisateur a été authentifié, exécuter la transaction, la liaison sécurisée étant utilisée pour transmettre les premières données, et/ou pour transmettre les secondes données, et/ou pour exécuter la transaction.

2. Procédé selon la revendication 1, dans lequel les premières données (CH) comprennent une séquence d'images affichées à l'écran d'affichage (DSP) par le processeur graphique (GP), chaque image de la séquence étant décomposée en plusieurs trames complémentaires non intelligibles individuellement pour un utilisateur, les trames complémentaires étant générées par un algorithme de cryptographie visuelle et affichées successivement de manière à ce que l'image correspondante apparaisse à l'écran d'affichage d'une manière intelligible pour l'utilisateur.

3. Procédé selon la revendication 1, dans lequel les premières données (CH) comprennent une image ou plusieurs images affichées successivement à l'écran d'affichage (DSP) par le processeur graphique (GP), chaque image affichée n'étant intelligible qu'en présence d'une image formée sur une étiquette (ETQ) semi transparente disposée sur l'écran d'affichage de manière à être superposée à l'image affichée, l'image formée sur l'étiquette et l'image affichée ou certaines des images affichées étant générées par un algorithme de cryptographie visuelle à partir d'une image intelligible à présenter à l'utilisateur.

4. Procédé selon l'une des revendications 1 à 3, dans lequel les premières données (CH) sont transmises par le processeur sécurisé (SE, SRV) au processeur graphique (GP) par la liaison sécurisée, ou bien sont générées par le processeur graphique.

5. Procédé selon l'une des revendications 1 à 4, dans lequel le processeur sécurisé est implanté sur une carte (SE) installée dans le terminal (MT), ou dans un serveur distant (SRV) connecté au terminal par l'intermédiaire d'un réseau de transmission de donnée.

6. Procédé selon l'une des revendications 1 à 5, dans lequel les secondes données (Ps0,Ps1,..., SC) sont des commandes introduites par l'utilisateur au moyen de l'organe de commande (CM) si les premières données (CH) ne sont pas directement accessibles, ou bien sont déterminées à partir de ces commandes en fonction des premières données (CH) et transmises au processeur sécurisé (SE, SRV) par la liaison sécurisée.

7. Procédé selon l'une des revendications 1 à 6, dans lequel la liaison sécurisée est établie sans utiliser d'algorithme de chiffrement asymétrique à partir d'une donnée secrète (SC) partagée par le processeur graphique (GP) et le processeur sécurisé (SE, SRV).

8. Procédé selon la revendication 7, comprenant des étapes d'authentification de l'utilisateur au moyen d'un code secret (SC) et d'utilisation du code secret pour générer une clé (K0) partagée uniquement par le processeur graphique (GP) et le processeur sécurisé (SRV, SE), la clé partagée étant utilisée pour établir la liaison sécurisée entre les processeurs graphique et sécurisé.

9. Procédé selon l'une des revendications 1 à 8, comprenant des étapes de :
génération par le processeur graphique (GP) ou le processeur sécurisé (SRV) d'une suite de numéros de séquence comportant un premier numéro de séquence (S0), et des numéros de séquence suivants (Si) obtenus chacun par application d'une fonction de hachage (f) à un numéro de séquence précédent (Si-1) dans la suite de numéros de séquence,
insertion dans chaque message (Mj) émis par la liaison sécurisée d'un numéro de séquence (Si) sélectionné de manière à être situé dans la suite de numéros de séquence avant un numéro de séquence (Si+1) précédemment transmis par la liaison sécurisée, et
comparaison du résultat de la fonction de hachage appliquée à un numéro de séquence reçu par la liaison sécurisée à un numéro de séquence précédemment reçu par la liaison sécurisée.

10. Procédé selon l'une des revendications 1 à 9, comprenant des étapes consistant à :
recueillir des données de paiement (PI), et chiffrer les données de paiement à l'aide de la clé de chiffrement (K0) utilisée pour sécuriser la liaison entre le processeur graphique et le processeur sécurisé (DSRV, SE),
mémoriser la clé de chiffrement par le processeur sécurisé, et mémoriser les données de paiement chiffrées par le processeur principal (HP),
lors d'une transaction de paiement, établir une liaison sécurisée entre le processeur graphique et un serveur de commerce électronique (ESRV), et une liaison sécurisée entre le processeur graphique et le processeur sécurisé (DSRV, SE),
authentifier l'utilisateur auprès du processeur sécurisé (DSRV, SE) et transmettre par la liaison sécurisée avec le processeur sécurisé la clé de chiffrement des données de paiement,
recevoir par le processeur graphique la clé de chiffrement des données de paiement et les données de paiement chiffrées, et déchiffrer les données de paiement, et
transmettre les données de paiement par la liaison sécurisée avec le serveur de commerce électronique.

11. Procédé selon la revendication 10, dans lequel le recueil des données de paiement (PI) comprend des étapes consistant à :
recueillir une photographie d'une carte de paiement et extraire de la photographie les données de paiement, ou bien
présenter à l'utilisateur des premières données (CH) par le processeur graphique (GP), recueillir des données (Ps0,Ps1,...) à partir de commandes introduites par l'utilisateur au moyen de l'organe de commande (CM), en relation avec les premières données, et transmettre les données recueillies au processeur graphique, et convertir par le processeur graphique les données recueillies en données de paiement à l'aide des premières données.

12. Procédé selon la revendication 10 ou 11, dans lequel les données de paiement (PI) sont dans un format standard compréhensible par le serveur de commerce électronique (ECSR), ou sont transmises à un serveur passerelle qui transmet les données de paiement au serveur de commerce électronique dans un format attendu par ce dernier.

13. Procédé selon l'une des revendications 1 à 12, comprenant des étapes de chargement d'un programme dans une mémoire du processeur graphique (GP), d'exécution du programme par le processeur graphique, de calcul d'une signature du contenu de la mémoire du processeur graphique tenant compte d'un code secret (SC) introduit par l'utilisateur et connu du processeur sécurisé (SE, SRV), de transmission de la signature au processeur sécurisé, et de vérification que la signature reçue par le processeur sécurisé correspond à une signature mémorisée et modifiée en tenant compte du code secret (SC') connu du processeur sécurisé.

14. Terminal (MT) comprenant un processeur principal (HP), un processeur graphique (GP) contrôlant un écran d'affichage (DSP), et un organe de commande (CM), le processeur graphique comprenant une mémoire (LMEM) non accessible de l'extérieur du processeur graphique,
**caractérisé en ce qu'**il est configuré pour mettre en oeuvre le procédé selon l'une des revendications 1 à 13.

15. Terminal selon la revendication 14, dans lequel l'organe de commande (CM) comprend une surface tactile transparente disposée sur l'écran d'affichage (DSP), ou comprend un clavier à touches.

16. Terminal selon la revendication 14 ou 15, dans lequel le processeur sécurisé (SRV, SE) appartient à un serveur distant relié au terminal par l'intermédiaire d'un réseau de communication, ou bien est intégré dans une carte et connecté au processeur principal (HP) du terminal.

## Patentansprüche

1. Transaktionsverfahren, umfassend die Schritte bestehend aus:
Vorsehen eines Endgeräts (MT), welcher einen Hauptprozessor (HP), einen Graphikprozessor (GP), welcher einen Anzeigebildschirm (DSP) steuert, und eine Steuereinrichtung (CM) umfasst, wobei der Graphikprozessor einen Speicher (LMEM) umfasst, auf den von außerhalb des Graphikprozessors nicht zugegriffen werden kann,
Herstellen einer Verbindung zwischen dem Graphikprozessor und einem Sicherheitsprozessor (SRV, SE), über den Hauptprozessor, wobei die Verbindung mittels eines Verschlüsselungsschlüssels (K0) gesichert ist, welcher ausschließlich durch den Graphikprozessor und den Sicherheitsprozessor geteilt ist, und auf die von außerhalb des Graphikprozessors nicht zugegriffen werden kann,
Darstellen erster Daten (CH) an den Nutzer,
Sammeln zweiter Daten (Ps0, Ps1,..., SC) ausgehend von den Befehlen (Ps0, Ps1,...), welche durch den Nutzer mittels der Steuereinrichtung (CM) in Verbindung mit den ersten Daten eingegeben worden,
Übermitteln der zweiten Daten zum Sicherheitsprozessor,
Authentifizieren des Nutzers ausgehend von den zweiten Daten, und
wenn der Nutzer authentifiziert worden ist, Ausführen der Transaktion, wobei die gesicherte Verbindung verwendet wird, um die ersten Daten zu übermitteln, und/oder um die zweiten Daten zu übermitteln, und/oder um die Transaktion auszuführen.

2. Verfahren nach Anspruch 1, wobei die ersten Daten (CH) eine Sequenz von Bildern umfassen, welche auf dem Anzeigebildschirm (DSP) durch den Graphikprozessor (GP) angezeigt werden, wobei jedes Bild der Sequenz in mehrere komplementäre Rahmen zerlegt ist, welche für den Nutzer nicht einzeln verständlich sind, wobei die komplementären Rahmen durch einen visuellen kryptographischen Algorithmus erzeugt sind und nacheinander der Art angezeigt werden, dass das korrespondierende Bild auf dem Anzeigebildschirm in einer für den Nutzer verständlichen Art erscheint.

3. Verfahren nach Anspruch 1, in welchem die ersten Daten (CH) ein Bild oder mehrere Bilder umfassen, welche nacheinander auf dem Anzeigebildschirm (DSP) durch den Graphikprozessor (GP) angezeigt werden, wobei jedes angezeigte Bild nur bei Vorhandensein eines Bildes, welches auf einem semitransparenten Etiketts (ETQ) gebildet ist, verständlich ist, welches auf dem Anzeigebildschirm so angeordnet ist, um mit dem angezeigten Bild auf dem Etikett überlagert zu werden und das angezeigte Bild oder bestimmte der angezeigten Bilder durch den visuellen kryptographischen Algorithmus von einen verständlichen Bild gebildet sind, das dem Nutzer gezeigt werden soll.

4. Verfahren nach einem der Ansprüche 1 bis 3, wobei die ersten Daten (CH) durch den Sicherheitsprozessor (SE, SRV) zum Graphikprozessor (GP) über die gesicherte Verbindung übertragen werden, oder durch den Graphikprozessor erzeugt werden.

5. Verfahren nach einem der Ansprüche 1 bis 4, wobei der Sicherheitsprozessor auf einer Karte (SE), welche in dem Endgerät (MT) installiert ist, oder in einem entfernten Server (SRV) angesiedelt ist, welcher mit dem Endgerät über ein Netz zur Datenübertragung verbunden ist.

6. Verfahren nach einem der Ansprüche 1 bis 5, wobei die zweiten Daten (Ps0, Ps1, ..., SC) Befehle sind, welche durch den Nutzer über die Steuereinrichtung (CM) eingegeben worden sind, wenn die ersten Daten (CH) nicht direkt zugänglich sind, oder ausgehend von den Befehlen in Funktion der ersten Daten (CH) bestimmt sind und zum Sicherheitsprozessor (SE, SRV) über die Sicherheitsverbindung übertragen werden.

7. Verfahren nach einem der Ansprüche 1 bis 6, wobei die gesicherte Verbindung hergestellt ist, ohne einen asymmetrischen Verschlüsselungsalgorithmus ausgehend von geheimen Daten (SC), welche durch den Graphikprozessor (GP) und den Sicherheitsprozessor (SE, SRV) geteilt werden, zu verwenden.

8. Verfahren nach Anspruch 7, umfassend Authentifizierungsschritte des Nutzers mittels eines geheimen Codes (SC) und der Verwendung des geheimen Codes zum Erzeugen eines Schlüssels (K0), welcher ausschließlich zwischen dem Graphikprozessor (GP) und dem Sicherheitsprozessor (SRV, SE) geteilt wird, wobei der geteilte Schlüssel zum Herstellen der gesicherten Verbindung zwischen den Graphik und Sicherheitsprozessoren verwendet wird.

9. Verfahren nach einem der Ansprüche 1 bis 8, umfassend die Schritte:
Erzeugen, durch den Graphikprozessor (GP) oder den Sicherheitsprozessor (SRV), einer Folge von Folgenummern, welche eine erste Folgenummer (SO), und folgende Folgenummern (Si) umfasst, welche jeweils durch Anwenden einer Schneidfunktion (F) auf eine vorhergehende Folgenummer (Si-1) in der Folge der Folgenummern erhalten worden sind,
Einfügen in jede Mitteilung (Mj), welche durch die gesicherte Verbindung ausgesendet ist, einer Folgenummer (Si), welche der Art ausgewählt ist, dass sie in der folgenden Folgenummer vor einer Folgenummer (Si + 1) angeordnet ist, welche vorher über die gesicherte Verbindung übertragen worden ist, und
Vergleich des Ergebnisses der angewendeten Schneidfunktion , welche auf eine durch die gesicherte Verbindung erhaltene Folgenummer angewendet wird, auf eine Folgenummer, welcher vorher durch die gesicherte Verbindung erhalten worden ist.

10. Verfahren nach einem der Ansprüche 1 bis 9, umfassend die Schritte bestehend aus:
Sammeln der Zahlungsdaten (PI), und Verschlüsseln der Zahlungsdaten mit Hilfe des Verschlüsselungsschlüssels (K0), welcher zum Sichern der Verbindung zwischen dem Graphikprozessor und dem Sicherheitsprozessor (DSRV, SE) verwendet worden ist,
Speichern des Verschlüsselungsschlüssels (K0) durch den Sicherheitsprozessor, und Speichern der verschlüsselten Zahlungsdaten durch den Hauptprozessor (HP),
während einer Zahlungstransaktion, Herstellen einer gesicherten Verbindung zwischen dem Graphikprozessor und einem E-Commerce-Server (ESRV), und einer gesicherten Verbindung zwischen dem Graphikprozessor und dem Sicherheitsprozessor (DSRV, SE),
Authentifizieren des Nutzers beim Sicherheitsprozessor (DSRV, SE) und Übertragen des Verschlüsselungsschlüssels der Zahlungsdaten über eine gesicherte Verbindung mit dem Sicherheitsprozessor,
Empfangen durch den Graphikprozessor des Verschlüsselungsschlüssel der Zahlungsdaten und der verschlüsselten Zahlungsdaten, und Entschlüsseln der Zahlungsdaten, und
Übertragen der Zahlungsdaten über die gesicherte Verbindung mit dem E-Commerce-Server.

11. Verfahren nach Anspruch 10, wobei das Sammeln der Zahlungsdaten (PI) die Schritte umfasst, bestehend aus:
Aufnehmen einer Photographie einer Zahlungskarte und Herauslesen der Zahlungsdaten aus der Photographie, oder
Zeigen der ersten Daten (CH) über den Graphikprozessor (GP) an den Nutzer, Sammeln der Daten (Ps0, Ps1,...) ausgehend von den Befehlen, welche durch den Nutzer mittels der Steuereinrichtung (CM) in Bezug auf die ersten Daten eingegeben worden sind, und Übertragen der gesammelten Daten an den Graphikprozessor, und Umwandeln der gesammelten Daten in Zahlungsdaten durch den Graphikprozessor mit Hilfe der ersten Daten.

12. Verfahren nach Anspruche 10 oder 11, wobei die Zahlungsdaten (PI) in einem Standartformat verständlich für den E-Commerce-Server (ECSR) sind, oder an einen Durchgangsserver übertragen werden, der die Zahlungsdaten an den E-Commerce-Server in einem durch den letzteren erwarteten Format überträgt.

13. Verfahren nach einem der Ansprüche 1 bis 12, umfassend die Schritte des Ladens eines Programms in einen Speicher des Graphikprozessors (GP), des Ausführens des Programms durch den Graphikprozessor, des Berechnens einer Signatur des Inhalt des Speichers des Graphikprozessors unter Beachtung des geheimen Codes (SC), welcher durch den Nutzer eingegeben worden ist, und dem Sicherheitsserver (SE, SRV) bekannt ist, der Übertragung der Signatur auf den Sicherheitsprozessor, und der Verifizierung , dass eine empfangene Signatur durch den Sicherheitsprozessor zu einer gespeicherten, und unter Beachten des geheimen Codes (SC'), der dem Sicherheitsserver bekannt ist, modifizierten Signatur korrespondiert.

14. Endgerät (MT), umfassend eine Hauptprozessor (HP), einen Graphikprozessor (GP), welcher eine Anzeigebildschirm (DSP) steuert, und eine Steuereinrichtung (GP), wobei der Graphikprozessor einen Speicher (LMEM), der nicht von außerhalb des Graphikprozessors zugänglich ist, umfasst,
**dadurch gekennzeichnet, dass** er konfiguriert ist, ein Verfahren nach einem der Ansprüche 1 bis 13 auszuführen.

15. Endgerät nach Anspruch 14, wobei die Steuereinrichtung (CM) eine empfindliche transparente Oberfläche, welche auf dem Anzeigebildschirm (DSP) angeordnet ist, umfasst oder eine Tastatur umfasst.

16. Endgerät nach Anspruch 14 oder 15, wobei der Sicherheitsprozessor (SRV, SE) zu einem entfernten Server gehört, welcher mit dem Endgerät über ein Kommunikationsnetzwerk verbunden ist, oder in eine Karte integriert ist und mit dem Hauptprozessor (HP) des Endgeräts verbunden ist.

## Claims

1. A method for executing a transaction, which method comprises steps consisting in:
providing a terminal (MT) comprising a main processor (HP), a graphics processor (GP) controlling a display screen (DSP), and an interfacing means (CM), the graphics processor comprising a memory (LMEM) that is inaccessible from outside the graphics processor;
establishing a link between the graphics processor and a secure processor (SRV, SE), via the main processor, the link being secured by means of an encryption key (K0) shared only by the graphics processor and the secure processor, and inaccessible from outside the graphics processor and the secure processor;
presenting first data (CH) to the user;
gathering second data (Ps0,Ps1,..., SC) from commands (Ps0,Ps1,...) entered by the user by means of the interfacing means (CM), the second data relating to the first data;
transmitting the second data to the secure processor;
authenticating the user on the basis of the second data; and
if the user has been authenticated, executing the transaction, the secure link being used to transmit the first data, and/or to transmit the second data, and/or to execute the transaction.

2. Method according to claim 1, wherein the first data (CH) comprise a sequence of images displayed on the display screen (DSP) by the graphics processor (GP), each image of the sequence being broken down into a plurality of complementary frames that are not individually intelligible to a user, the complementary frames being generated by a visual cryptography algorithm and displayed in succession so that the corresponding image appears on the display screen in a manner that is intelligible to the user.

3. Method according to claim 1, wherein the first data (CH) comprise an image, or a plurality of images displayed in succession on the display screen (DSP) by the graphics processor (GP), each displayed image being intelligible only in the presence of an image formed on a semi-transparent label (ETQ) positioned on the display screen in such a way as to be superposed on the displayed image, the image formed on the label and the image, or some of the images, displayed being generated by a visual cryptography algorithm from an intelligible image to be presented to the user.

4. Method according to one of claims 1 to 3, wherein the first data (CH) are transmitted by the secure processor (SE, SRV) to the graphics processor (GP) via the secure link, or else are generated by the graphics processor.

5. Method according to one of claims 1 to 4, wherein the secure processor is integrated into a card (SE) installed in the terminal (MT), or into a remote server (SRV) connected to the terminal via a data transmission network.

6. Method according to one of claims 1 to 5, wherein the second data (Ps0,Ps1,..., SC) are commands entered by the user by means of the interfacing means (CM) if the first data (CH) are not directly accessible, or else are generated from these commands depending on the first data (CH) and transmitted to the secure processor (SE, SRV) via the secure link.

7. Method according to one of claims 1 to 6, wherein the secure link is established, without using an asymmetrical encryption algorithm, from a secret data item (SC) shared by the graphics processor (GP) and the secure processor (SE, SRV).

8. Method according to claim 7, comprising steps of authenticating the user by means of a secret code (SC) and of using the secret code to generate a key (K0) shared only by the graphics processor (GP) and the secure processor (SRV, SE), the shared key being used to establish the secure link between the graphics processor and the secure processor.

9. Method according to one of claims 1 to 8, comprising steps of:
generating, using the graphics processor (GP) or the secure processor (SRV), a series of sequence numbers comprising a first sequence number (SO), and the subsequent sequence numbers (Si) each being obtained by applying a hash function (f) to a preceding sequence number (Si-1) in the series of sequence numbers,
inserting, into each message (Mj) sent via the secure link, a sequence number (Si) selected so as to be located in the series of sequence numbers before a sequence number (Si+1) transmitted beforehand via the secure link, and
comparing the result of the hash function applied to a sequence number received via the secure link with a sequence number received beforehand via the secure link.

10. Method according to one of claims 1 to 9, comprising steps consisting in:
gathering payment data (PI) and encrypting the payment data using the encryption key (K0) used to secure the link between the graphics processor and the secure processor (DSRV, SE),
storing the encryption key in the secure processor, and storing the encrypted payment data in the main processor (HP),
during a payment transaction, establishing a secure link between the graphics processor and an e-commerce server (ESRV), and a secure link between the graphics processor and the secure processor (DSRV, SE);
authenticating the user in the secure processor (DSRV, SE) and transmitting, via the secure link with the secure processor, the encryption key of the payment data,
the graphics processor receiving the encryption key of the payment data and the encrypted payment data, and decrypting the payment data; and
transmitting the payment data via the secure link with the e-commerce server.

11. Method according to claim 10, wherein the gathering of the payment data (PI) comprises steps consisting in:
taking a photograph of a payment card and extracting the payment data from the photograph; or else
the graphics processor (GP) presenting first data (CH) to the user, gathering data (Ps0,Ps1,...) relating to the first data from commands entered by the user by means of the interfacing means (CM), transmitting the gathered data to the graphics processor and converting, by way of the graphics processor, the gathered data into payment data using the first data.

12. Method according to claim 10 or 11, wherein the payment data (PI) are in a standard format that is comprehensible to the e-commerce server (ECSR), or are transmitted to a gateway server that transmits the payment data to the e-commerce server in a format expected by the latter.

13. Method according to one of claims 1 to 12, comprising steps of loading a program into a memory of the graphics processor (GP), of executing the program in the graphics processor, of calculating a signature for the contents of the memory of the graphics processor taking account of a secret code (SC) entered by the user and known by the secure processor (SE, SRV), of transmitting the signature to the secure processor, and of verifying that the signature received by the secure processor corresponds to a stored signature modified to take account of the secret code (SC') known by the secure processor.

14. A terminal (MT) comprising a main processor (HP), a graphics processor (GP) controlling a display screen (DSP), and an interfacing means (CM), the graphics processor comprising a memory (LMEM) that is inaccessible from outside the graphics processor,
**characterized in that** it is configured to implement the method according to one of claims 1 to 13.

15. The terminal according to claim 14, wherein the interfacing means (CM) comprises a transparent touch-sensitive surface placed on the display screen (DSP), or comprises a keypad.

16. The terminal according to claim 14 or 15, wherein the secure processor (SRV, SE) belongs to a remote server connected to the terminal via a communication network, or else is integrated into a card and connected to the main processor (HP) of the terminal.
